# EUROPEAN PATENT APPLICATION

(11) **EP 4 672 667 A1**
(43) Date of publication of application: **31.12.2025**
(21) Application number: 25185116.8
(22) Date of filing: 25.06.2025
(51) Int. Cl.: H04L 9/08, H04L 9/00

(54) **BACKUP AND RECOVERY SYSTEM AND METHODS FOR CRYPTOCURRENCY HARDWARE WALLET**

(30) Priority: 25.06.2024 US 202418753784
(71) Applicant: Crossbar, Inc., Santa Clara CA 95054 (US)
(72) Inventor: Jo, Sung Hyun, Sunnyvale, CA, 94087 (US)
(74) Representative: Samson & Partner Patentanwälte mbB

(57) **Abstract**

Backup and recovery of multi-party computation (MPC) security data utilized to secure digital assets and transactions thereof can enhance user confidence and user experience in digital asset transactions. Example MPC security data can include cryptographic keys and key shares utilized with a N x M MPC signature and validation framework. A computing device participating in generation of MPC secure data can retain a segment of the MPC secure data and can encrypt and store an encrypted segment at a second device. A recovery service or recovery application at the second device can facilitate recovery of the MPC secure data segment at the computing device, or at an additional device not involved in generation of the MPC secure data. The recovery service or application can facilitate recovery of the MPC secure data segment even in the event the computing device is lost.

## Description

### INCORPORATION BY REFERENCE

U.S. Patent Application No. 18/200,318 filed May 22, 2023 and titled "UTILIZING TWO-TERMINAL RESISTIVE SWITCHING MEMORY TO STORE VALIDATION DATA OF AN INTEGRATED CIRCUIT DEVICE", and U.S. Patent Application No. 18/218,948 filed July 24, 2023 and titled "SECURE MICROCONTROLLER WITH UNIFIED RRAM AND SUB-MODULE ADDRESSING AND ACCESS CONTROL" are hereby incorporated by reference herein in their respective entireties and for all purposes.

### TECHNICAL FIELD

The subject disclosure relates generally to improved utility and reliability for secure digital transactions, and as one illustrative example: backup or recovery of cryptocurrency validation data algorithms.

### BACKGROUND

Security in electronic communication is relevant at micro and macro scales, from operations of components within a single die to network communications of communicatively interconnected computing devices. Moreover, communication security is relevant at various scales in between the micro and macro levels, as well as for unconventional (or even heretofore unknown) inter-operations of electronic devices. Although variations exist, probably the most common application in the modern context for securing electronic communication is with cryptographic algorithms.

As a general characteristic, cryptographic algorithms tend to leverage highly complex computational schemes that make breaking the algorithm practically impossible, though in most cases not theoretically impossible. The greater the complexity of the cryptographic algorithm the more practical difficulty in breaking it. For this statement to be true, however, certain mathematical assumptions that the algorithm relies upon must also hold true. One such assumption is the true randomness of a numbering scheme leveraged by an algorithm. Where systematic patterns exist within the numbering scheme or the mechanism utilized to generate (random) numbers, an algorithm is more vulnerable to being compromised. To this end, the national institute on standards and technology (NIST) maintains tests for randomness of number generators for use in cryptography applications (see, *e.g.,* A. Rukhin, et al., "A Statistical Test Suite for Random and Pseudorandom Number Generators for Cryptographic Applications", NIST, vol. 800-22, no. rev 1a, p. 131, 2010).

One potential vulnerability for secure communications is memory utilized to store secure data. Hacking techniques can leverage knowledge about how a memory operates at a cell or array level, how a memory stores bits of data, physical effects of operations of the memory and so forth to infer information about secure data stored in the memory. Such knowledge rarely yields the secure data in and of itself. However, even where only minor correlation about some bits of the stored data can be correctly inferred, the theoretical or mathematical security of stored data can be undermined. This in turn can reduce the difficulty of compromising the secure data by brute force calculations or other conventional means.

In addition to confidence in storing secure data, the inventor of the present application has proposed techniques for generating data with memory elements. For instance, stochastic characteristics of resistive-switching structures have been proposed by the inventor as suitable for generating non-correlated data for random number generation, or similar applications. Each of these applications has met different needs for electronic memory applications or specialty data generation applications.

In light of the above, the Assignee of the present disclosure continues to develop and pursue practical utilizations of integrated circuit devices for secure communications.

### SUMMARY

The following presents a simplified summary of the specification in order to provide a basic understanding of some aspects of the specification. This summary is not an extensive overview of the specification. It is intended to neither identify key or critical elements of the specification nor delineate the scope of any particular embodiments of the specification, or any scope of the claims. Its purpose is to present some concepts of the specification in a simplified form as a prelude to the more detailed description that is presented in this disclosure.

The present disclosure provides for backup of multi-party computation (MPC) security data utilized for securing digital transactions. One illustrative and non-limiting example can include: backup of cryptographic key shards utilized with a MPC cryptocurrency transaction service. For instance, a computing device participating in generation of MPC secure data can retain a segment of the MPC secure data, and can encrypt and store an encrypted segment at a second device (*e.g.,* a cloud server device, a hardware wallet device, another computing device, or the like, or a suitable combination of the foregoing). A recovery service or recovery application at the second device can facilitate recovery of the MPC secure data segment at an additional device not involved in generation of the MPC secure data. The recovery service or application can facilitate recovery of the MPC secure data segment in the event the computing device - and the MPC secure data segment retained at the computing device - is lost.

In an aspect of the disclosed embodiments, disclosed is a method for securing MPC security data. The method can comprise generating security data for an encryption application for a cryptocurrency transaction, splitting the security data into an integer, M of security data segments, where M is greater than one and distributing M-1 data segments of the M security data segments to respective M-1 distinct devices, and retaining an M^{th} data segment at an M^{th} device. Furthermore, the method can comprise encrypting the M^{th} data segment at the M^{th} device producing an encrypted data segment and generating decryption data for decrypting the encrypted data segment. Still further, the method can comprise distributing the encrypted data segment and the decryption data to a first of the M-1 distinct devices. In addition to the foregoing, the method can comprise initiating a recovery application for the encrypted data segment and for the decryption data at least at the first of the M-1 distinct devices facilitating access to the encrypted data segment and the decryption data at an M+ 1 ^{th} device.

Further aspects of the presently disclosed embodiments provide a method for recovery of data. The method can comprise forming a connection with a server device that manages access to a first encrypted key shard of a MPC encryption key and that stores a second encrypted key shard of the MPC encryption key, wherein the first encrypted key shard is generated at a second device different from the server device. The method can further comprise logging in to a recovery application for the MPC encryption key and providing login information at the recovery application. Additionally, the method can comprise providing identifying information at the recovery application, wherein the identifying application distinguishes the first encrypted key shard or distinguishes the second device. Moreover, the method can comprise obtaining access to a decrypted first key shard by accessing the first encrypted key shard through the recovery application.

In other aspects of the disclosed embodiments, provided is a server device. The server device can comprise a memory for storing application instructions and application data for providing a cryptocurrency validation service for a plurality of remote devices and a processor for executing the application instructions. The server device can additionally comprise a secure storage device for storing secure data associated with the cryptocurrency validation service and a network communication interface coupled to a wide area network. The application instructions can include communicatively coupling, by the network communication interface, to a first device of the plurality of remote devices by way of the wide area network connection, and communicatively coupling, by the network communication interface, to a second device of the plurality of remote devices by way of a limited, single address interface of the second device utilizing the wide area network. Furthermore, the application instructions can comprise generating, by the processor, a N x M encryption key, where M is a number of key shards associated with the N x M encryption key and N is a number of key shards required to produce a valid digital signature with the N x M encryption key or to read the valid digital signature. Moreover, the application instructions can comprise distributing, by the network communication interface, a first key shard to the first device and a second key shard to the second device and receiving, by the network communication interface, an encrypted first key shard and associated decryption data, and saving the encrypted first key shard and associated decryption data to the secure storage device. In addition to the foregoing, the application instructions can comprise initiating, by the processor and the network communication interface, a recovery application facilitating conditional access to the encrypted first key shard and the decryption data for an additional remote device excluded from the plurality of remote devices.

The following description and the drawings set forth certain illustrative aspects of the specification. These aspects are indicative, however, of but a few of the various ways in which the principles of the specification may be employed. Other advantages and novel features of the specification will become apparent from the following detailed description of the specification when considered in conjunction with the drawings.

### BRIEF DESCRIPTION OF THE DRAWINGS

Various aspects or features of this disclosure are described with reference to the drawings, wherein like reference numerals are used to refer to like elements throughout. In this specification, numerous specific details are set forth in order to provide a thorough understanding of this disclosure. It should be understood, however, that certain aspects of the subject disclosure may be practiced without these specific details, or with other methods, components, materials, *etc.* In other instances, well-known structures and devices are shown in block diagram form to facilitate describing the subject disclosure.
Figure 1 illustrates a block diagram of an example integrated circuit (IC) device formed on a monolithic semiconductor die according to aspects of the disclosed embodiments;
Figure 2 depicts a diagram of an example multi-party communication (MPC) facilitating a secure transaction, in further aspects of disclosed embodiments;
Figure 3 illustrates a block diagram of a sample cryptocurrency wallet device on a monolithic chip with limited and dedicated communication, in an aspect of the embodiments;
Figure 4 illustrates an example system for MPC secure data generation and backup according to still other aspects of the present disclosure;
Figure 4A depicts an example system for backup of MPC secure data with hardware wallet device redundancy, in additional aspects disclosed herein;
Figure 5 depicts a block diagram of an example recovery of MPC secure data according to further aspects of the present disclosure;
Figure 6 illustrates a block diagram of a sample recovery of MPC secure data utilizing a hardware wallet device in an additional aspect(s);
Figure 7 depicts a block diagram of a sample recovery of MPC secure data utilizing a mobile device in yet another disclosed aspect(s);
Figure 8 illustrates a flowchart of an example method for generation and backup of secure data for a MPC encryption algorithm, in one or more disclosed embodiments;
Figure 9 depicts a flowchart of a sample method for generation and backup of secure data for a N x M encryption algorithm in yet other embodiments;
Figure 10 illustrates a flowchart of an example method for recovery of secure data facilitating a N x M encryption algorithm in alternative or additional embodiments;
Figure 11 illustrates a block diagram of an example electronic operating environment in accordance with one or more disclosed embodiments;
Figure 12 depicts a block diagram of an example computing environment for implementing one or more embodiments of the present disclosure.

### DETAILED DESCRIPTION

### INTRODUCTION

Threats to security and validity of electronic devices by way of hacking and illicit access are widespread. Mechanisms to secure and authenticate an electronic device and inter-device network communication include cryptography, virtual private networking, combinations of these and others. In the event that electronic devices engaged in network communication are properly authenticated, the communication channel between the devices may still be vulnerable. This is often addressed by encrypting data before transmitting important communications onto a network. Virtual private networks (VPNs) can utilize a tunneling protocol, which can include encryption, between an electronic device and a communication network, between two networks, and so forth. But hacking efforts continue to identify and exploit weaknesses in security of electronic devices and electronic communications.

As one example, access to an electronic device involved in a network communication can be utilized to compromise the communication and even other devices involved in the communication. To illustrate, illicit modification or substitution of a component of an electronic device *(e.g.,* a nonvolatile memory, a firmware, an encryption key, *etc.),* can effectively compromise the electronic device itself. Moreover, fabrication techniques utilized to create a chip, while cost effective and efficient, can leave inherent vulnerabilities in the chip itself. As another illustration, internal device packaging that facilitates communication between fabricated components that constitute an electronic device (*e*.*g*., inter-chip bonding that also facilitates inter-chip communication, or printed circuit board communication lines connecting chips, *etc*.) can be vulnerable to illicit direct physical access that compromises communication within a device itself. Similarly, physical access to a chip can be leveraged to retrieve secret security data used to encrypt communications, thereby compromising those communications. Also, network communications can potentially be compromised by accessing components of a network, sub-components thereof, or the data transmitted therein. Several core deficiencies in electronic devices and electronic communication are often exploited to compromise security in digital transactions.

An electronic device can be constructed to be resistant to illicit physical access. In some examples, an electronic device can be constructed to include a secure element that has physical countermeasure (PCM) shield and is resistant to hacking. Secret data - such as a cryptocurrency key, secret user data, sensitive data, and so on - can be stored in a memory embedded within the secure element and protected by the PCM shield. Inclusion of a secure element can deter some hacking and illicit access attempts, but others can still be effective if communication pathways between the secure element and a processor, device controller, memory structure utilized by the processor, and so on, are not protected by the PCM shield. This can occur, for instance, in bonded chip devices in which the secure element is formed on one chip that is bonded to a second chip containing the processor or device controller and memory utilized by the processor/controller. Particularly where the bonding mechanism is utilized for communication between the processor/controller and the secure element, illicit access to any of the processor/controller, processor/controller memory or merely the bonding mechanism can facilitate hacking of the secure element, however. More generally, if a controller or processing device accessing the secure element is unprotected by the PCM shield, the controller becomes a point of vulnerability. In addition, if a communication link between the secure element and controller is not protected or covered by the PCM shield, data transport on the communication link can also be a point of weakness (even if the processing device has separate physical countermeasures, security, and so on).

In addition to electronic device structural vulnerabilities, many secure element devices suffer from archaic single-key security architectures and do not have the computational capacity or memory to take advantage of sophisticated architectures such as multi-party computation (MPC). Single-key security also imposes a threat of asset loss through loss of a single security key, or loss of a single electronic device storing the security key. Backup mechanisms for preventing key loss or recovery of lost security keys are archaic and very limited. Embodiments of the present disclosure leverage a sophisticated MPC encryption and decryption framework and provide comprehensive backup and recovery of lost or compromised security data.

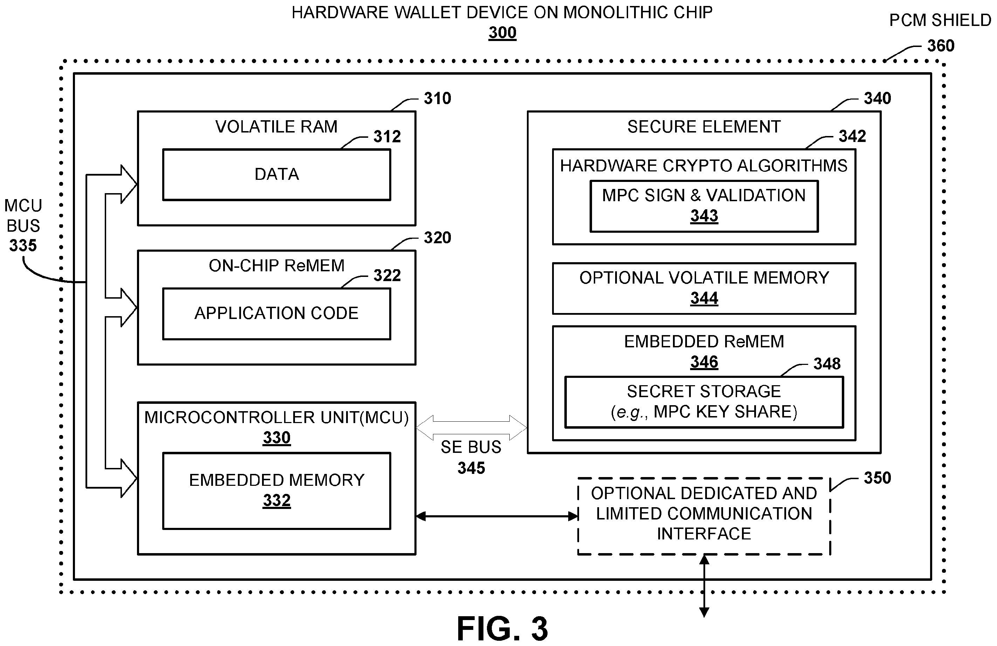

Disclosed embodiments include a secure electronic device that integrates a secure element with a high capacity processing device, storage memory and working memory in a single monolithic chip structure *(e.g.,* see Figure 3, *infra).* A secure bus structure can be integrated within the monolithic chip structure as well, facilitating secure communication between the processor and secure element. In these embodiments, the PCM shield protecting the secure element also protects the processor, storage memory, working memory and secure bus structure, providing a much more robust resistance to hacking. Moreover, the secure element can be constructed to store secret data and to implement algorithms for processing the secret data. Optionally the secure element can include embedded hardware logic configured for implementing the algorithms that achieves highly accelerated processing for such algorithms (as compared, for example, to software logic or general purpose hardware logic). In at least some embodiments, the secure element can include embedded hardware logic that can be utilized to execute cryptocurrency transactions, blockchain transactions, or the like, among others. Examples can include: generating a digital signature with a cryptographic key (or key share(s)) stored in the secure element, reading *(e.g.,* in the context of validating) a digital signature generated by other secret data/key, authenticating security, login or user data, performing blockchain hash functions, performing "mining" computations for a blockchain or a cryptocurrency, among many others.

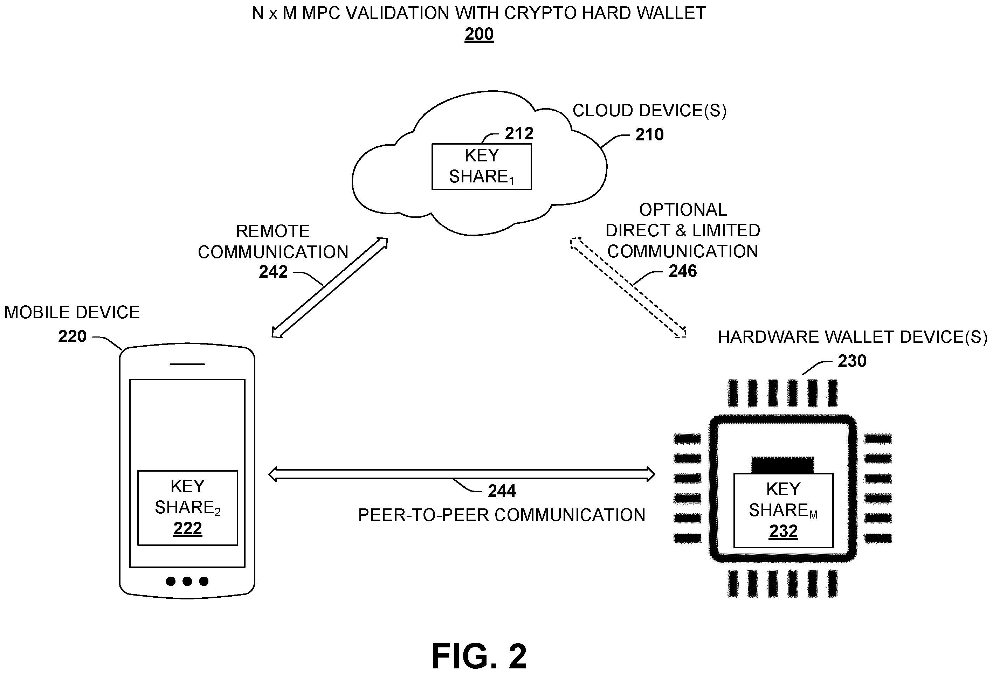

In some disclosed embodiments, a secure element can include logic to de-centrally generate secret data as part of a MPC data generation algorithm involving an electronic device containing the secure element communicatively coupled with one or more other computing devices (*e*.*g*., via a network, peer-to-peer communication, or the like, or a suitable combination of the foregoing). The logic can yield a secret data share at the secure element that, in combination with some or all secret data shares generated at the one or more other computing devices, form decentralized secret data (*e.g.,* a decentralized encryption key). The secure element can include logic to store the secret data share at a digital storage within the secure element (and optionally encrypt and distribute an encrypted secret data share to an external remote device participating in the MPC data generation algorithm). Moreover, the secure element can utilize the hardware logic to perform MPC digital signature algorithms and MPC digital signature validation algorithms (among others) as part of MPC computations (*e*.*g*., see Figure 2, *infra)* utilizing the secret data share. In further embodiments, the secure element can perform a data share backup process or a data share recovery process as described throughout the present disclosure. A monolithic secure element device (*e.g.,* see Figure 3, *infra)* can include a secure communication interface, which can be limited to a hardware interface (*e*.*g*., wired) with a mobile device or computing device, or can include a limited wide area network interface (*e*.*g*., wired or wireless) that can access only a limited set of network nodes, such as a secure network node, to facilitate fully symmetric MPC communications, in some embodiments.

Further embodiments of the present disclosure provide for backup, recovery, or the like, of secret data utilized to enable access to a digital asset. The digital asset can be a cryptocurrency, a digital currency, a non-fungible token, a blockchain asset, a user login identifier such as a password, PIN or other identifier, and so on. In various embodiments, the secret data utilized to access the digital asset can be MPC-generated data involving multiple computing devices executing an MPC secret data generation algorithm. The MPC secret data generation algorithm can be executed concurrently by a plurality of the multiple computing devices over a network (the plurality can be all of the devices or a subset thereof) or can be executed by one of the multiple computing devices on behalf of the others. Execution of the MPC secret data generation algorithm produces M segments or shares of secret data *(e.g.,* a standalone de-centrally generated secret key; a secret key of a public/private key pair; and so forth), where M is a positive integer greater than one. In some embodiments, each of the M secret data shares can generate respective digital signatures that can be properly validated by a second number: N, of the M secret data shares. Described differently: N secret data shares can be utilized to properly validate a digital signature generated by any one (or more) of the M secret data shares. Depending on a MPC secret data generation algorithm utilized by the multiple computing devices, N can be a positive integer from 1 to M. In various embodiments of the present disclosure, N can be less than M.

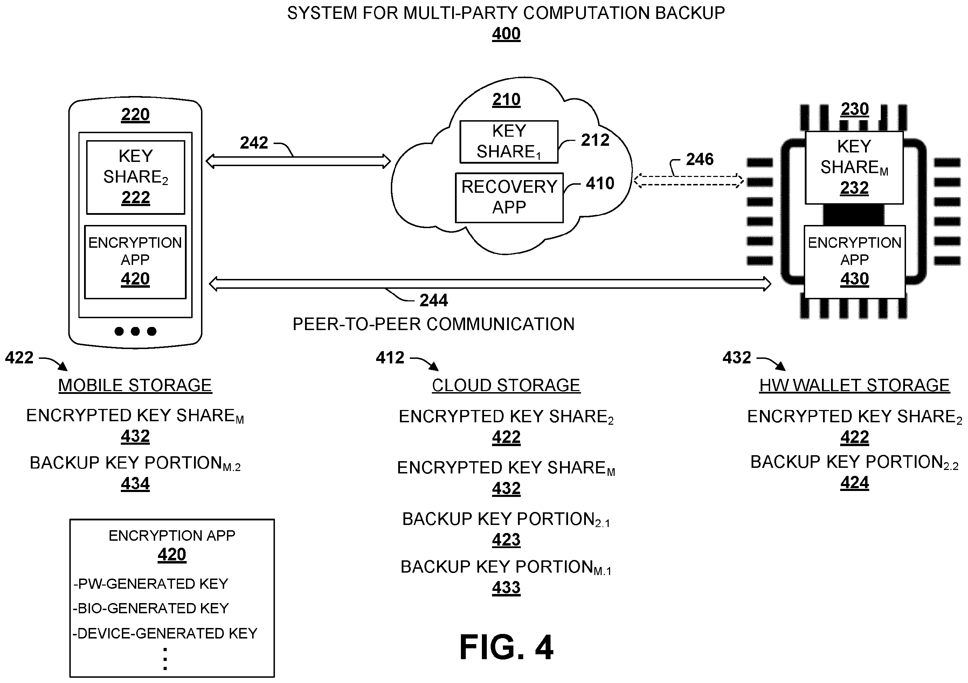

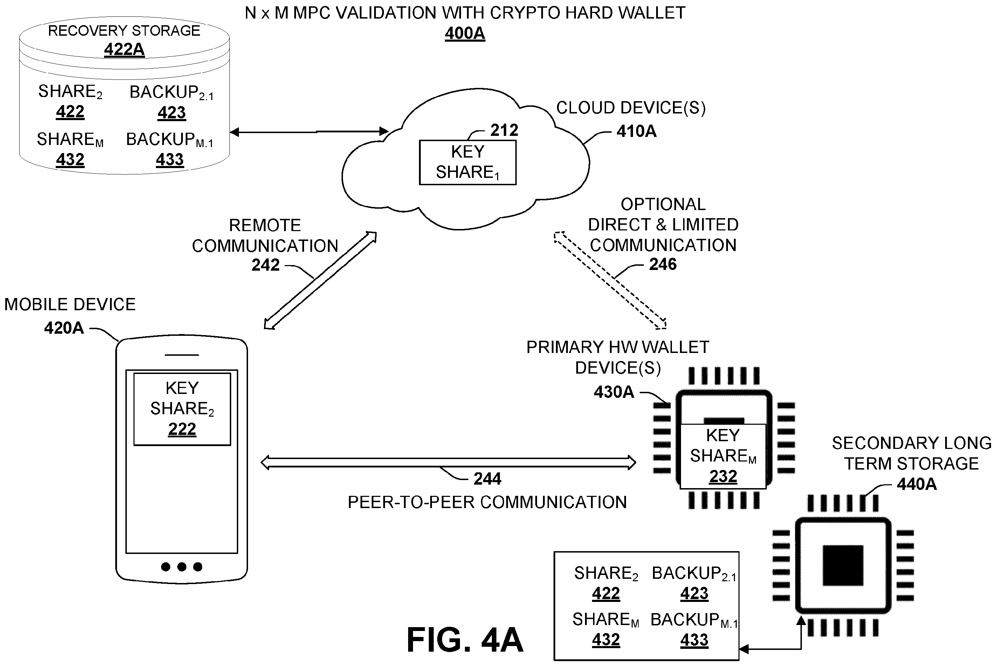

For backing up MPC generated secret data shares (or segments), each of M secret data segments can be stored at respective computing devices of the multiple computing devices utilized to generate the secret data segments. In addition, a first secret data segment stored at a first computing device can be encrypted with encryption data to generate an encrypted first secret data segment. The encrypted first secret data segment together with first decryption data (configured to re-generate the first secret data segment from the encrypted first secret data segment; or when combined with additional decryption data, can re-generate the first secret data segment) can be transmitted to and stored at least at a second computing device *(e.g.,* see Figures 4 and 4A, *infra)* and optionally to other computing devices (of the multiple computing devices, or of a separate device not participating in the generation of the MPC secret data). Further, a second secret data segment stored at a second computing device (of the multiple computing devices utilized to generate the secret data) can be encrypted with second encryption data to generate an encrypted second secret data segment. The encrypted second secret data segment together with second decryption data (configured to re-generate the second secret data segment from the encrypted second secret data segment) can be transmitted to and stored at least at another of the multiple computing devices (and optionally at a separate device not participating in the generation of the MPC secret data). In some embodiments, the first computing device can transmit the encrypted first secret data segment and first decryption data for storage at the second computing device and at a third computing device(s) of the multiple computing devices, and the second computing device can transmit the encrypted second secret data segment and the second decryption data for storage at the first computing device and at the third computing device(s) of the multiple computing devices. In some embodiments, the third computing device can be a server device, such as a cloud server device providing a cryptocurrency backup and recovery service (*e*.*g*., see Figure 4). This cloud server device can be separate from or in addition to a cryptocurrency storage and transaction service, for instance, such as a cloud-enabled MPC cryptocurrency storage and transaction service, or similar.

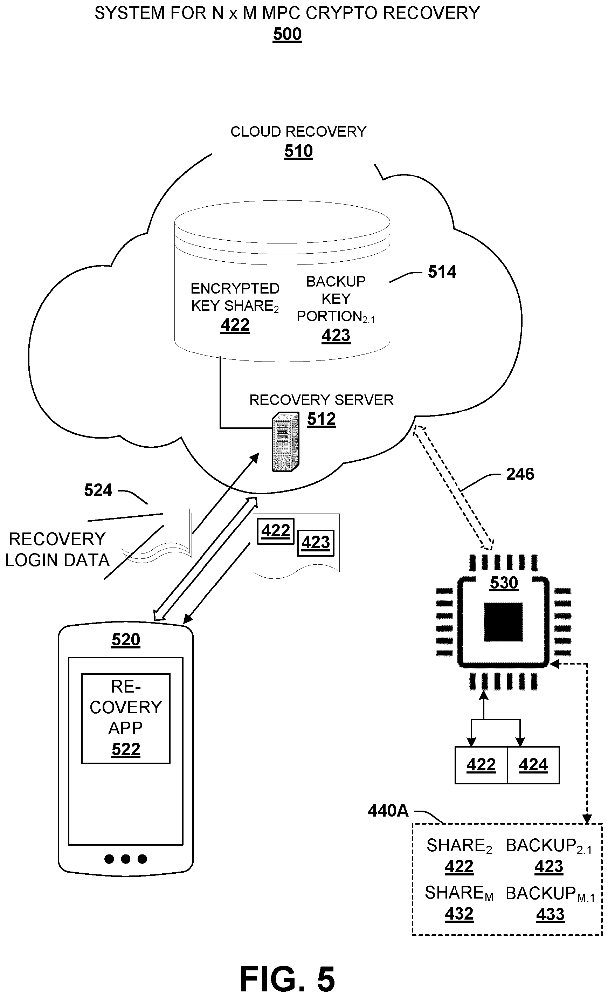

Further embodiments of the present disclosure provide for recovery of a secret data segment. In at least some embodiments, the recovery can be implemented at a new computing device not included in the multiple computing devices utilized to generate secret data of which the secret data segment is a part, without compromising security of digital assets secured by the secret data. The new computing device can login to a recovery service at a server device that is among the multiple computing devices, and upon providing valid identification data can receive an encrypted backup of the secret data segment and associated decryption data. The new computing devices can decrypt the encrypted backup of the secret data segment to re-generate the secret data segment, and participate with one or more other of the multiple computing devices (such as the server device, a hardware wallet device, and so forth; *see* Figures *5-7**, infra)* having respective secret data segments to perform an MPC validation of the secret data (*e*.*g*., generate a digital signature; validate a digital signature; and so forth). This MPC validation then enables a digital transaction pertaining to the digital assets secured by the secret data. Where the MPC algorithm generating the secret data is an N of M MPC algorithm, introduced previously, the new computing device can participate with N-1 other devices of the multiple computing devices to perform the MPC validation of the secret data. This allows a lost device of the multiple computing devices to be replaced by the new computing device, facilitating recovery of lost data stored on the lost device, in various embodiments of the present disclosure.

As utilized herein, the term "substantially" and other relative terms or terms of degree *(e.g.,* about, approximately, roughly, and so forth) are intended to have the meaning specified explicitly in conjunction with their use herein, or a meaning which can be reasonably inferred by one of ordinary skill in the art, or a reasonable variation of a specified quality(ies) or quantity(ies) that would be understood by one of ordinary skill in the art by reference to this entire specification (including the knowledge of one of ordinary skill in the art as well as material incorporated by reference herein). As an example, a term of degree could refer to reasonable manufacturing tolerances about which a specified quality or quantity could be realized with fabrication equipment. Thus, as a specific illustration, though non-limiting, for an element of a resistive switching device expressly identified as having a dimension of about 50 angstroms (A), the relative term "about" can mean reasonable variances about 50 A that one of ordinary skill in the art would anticipate the specified dimension of the element could be realized with commercial fabrication equipment, industrial fabrication equipment, laboratory fabrication equipment, or the like, and is not limited to a mathematically precise quantity (or quality). In other examples, a term of degree could mean a variance of +/- 0-3%, +/- 0-5%, or +/- 0-10% of an expressly stated value, where suitable to one of ordinary skill in the art to achieve a stated function or feature of an element disclosed herein. In still other examples, a term of degree could mean any suitable variance in quality(ies) or quantity(ies) that would be suitable to accomplish an explicitly disclosed function(s) or feature(s) of a disclosed element. Accordingly, the subject specification is by no means limited only to specific qualities and quantities disclosed herein, but includes all suitable variations of a specified quality(ies) or quantity(ies) reasonably conveyed to one of ordinary skill in the art by way of the context disclosed herein.

### OVERVIEW

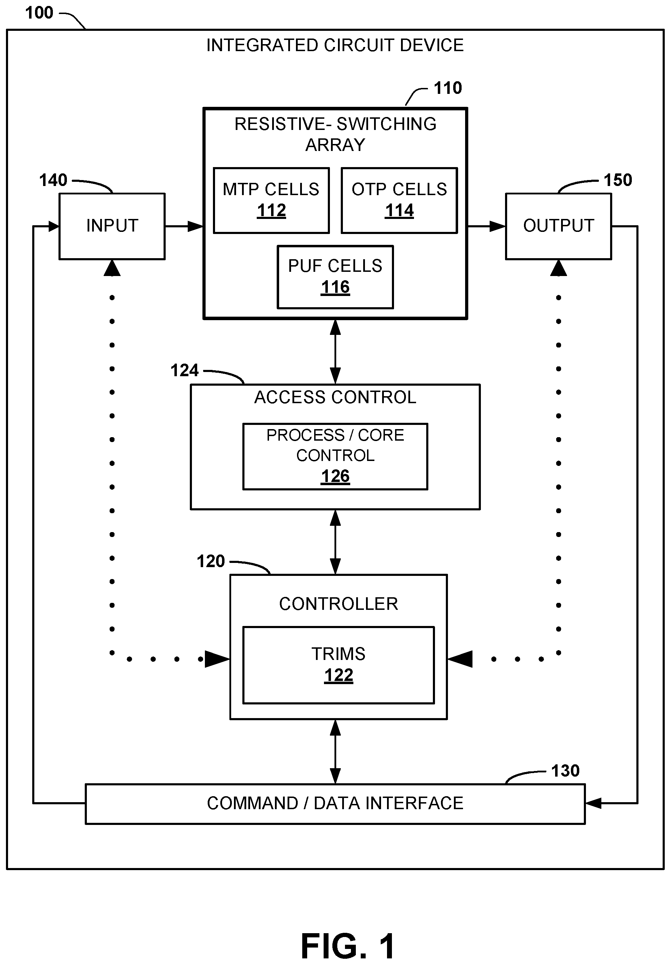

Figure 1 illustrates a block diagram of an example integrated circuit device 100 for an electronic device *(e.g.,* a secure computing device, a secure element, a digital hardware wallet on monolithic chip, and so forth) according to one or more embodiments of the present disclosure. Integrated circuit device 100 includes an array(s) 110 of two-terminal resistive-switching memory cells (though other magnetic switching or charge-trapping two-terminal memory cells or even three-terminal memory cells can be utilized instead or in addition, in some disclosed embodiments). Array(s) 110 of memory can include resistive switching memory cells, and different portions of the resistive switching memory cells can be characterized for different memory or data generation functions. Example functions of resistive switching memory cells of array(s) 110 can include PUF data generation or storage, true random number generation (TRNG) or storage, one-time programmable (OTP) data storage and many-time programmable (MTP) data storage (also referred to as rewritable or program/erase). Different groups of memory cells of array(s) 110 are provided to implement these functions. In an embodiment, array(s) 110 of memory can have all resistive switching memory cells characterized for one function (*e*.*g*., PUF data, TRNG data, MTP data or OTP data). Multiple resistive-switching memory cells can be aggregated to define a differential PUF bit (or a differential TRNG bit), or a single cell can define a PUF bit (or TRNG bit) in other embodiments. Thus, depicted in Figure 1 are PUF memory cells 116 (which can also include TRNG cells), OTP memory cells 114 as well as MTP or rewritable / reversibly programmable memory cells 112. Array(s) 110 of resistive-switching memory cells can be characterized for other types of memory cell functions not specifically depicted in Figure 1, where suitable.

As shown, array(s) 110 of two-terminal resistive-switching memory cells can be a unified memory structure, whereas in other embodiments, a different array (having a distinct access control 124) can define separate memory cells. In yet another embodiment, each of MTP cells 112, OTP cells 114 and PUF cells 116 can be embodied in distinct resistive switching arrays having respective access controls 124. More generally, one or more of: PUF cells 116, OTP cells 114 and MTP cells 112 can be separate memory structures from array(s) 110 of memory. For example, OTP cells 114 can be located externally to array(s) 110 on a different portion of a monolithic semiconductor chip. Alternatively, in other embodiments, OTP cells 114 (or MTP cells 112, or PUF cells 116) can be at least in part included within array(s) 110 of memory. For instance, OTP cells 114 can be embodied as an array among a set of arrays that form array(s) 110 of two-terminal resistive-switching memory, a block of memory within such an array(s) 110, a set of pages within one or more blocks or arrays, or other suitable arrangement.

Access control 124 can be configured to limit access to array(s) 110 or portions of array(s) 110. In an embodiment, access control 124 can be implemented in conjunction with a bus providing electronic communication with an array(s) 110 of memory cells (*e.g.,* see MCU bus 335 or SE bus 345 of Figure 3, *infra*). Different buses can have different access control settings in various embodiments. For instance, access control 124 associated with an array(s) 110 of a disclosed secure element can have a core/process control 126 configured to limit a processor, a core of a processor, a process or thread running on a processor, or the like, which can access the array(s) 110 associated with the secure element. Another access control 124 associated with a bus facilitating electronic communication with an array(s) 110 for storing application code, or with a volatile memory for maintaining operating data of an application in execution, can have few or no core/process control 126 access restrictions for the processor(s), core(s), processes or process threads implemented within a monolithic semiconductor chip such as IC device 100. Access control 124 can also enforce access limitations to array(s) 110 for external commands or data received at a command / data interface 130 (see below).

Controller 120 is provided to perform operations on array(s) 110 of two-terminal resistive-switching memory cells. Suitable operations can include memory operations, such as reading data from, writing data to, overwriting data at, and so on, subsets of array(s) 110. Memory operations can include processes such as program (write), read, overwrite, erase, and so forth, suitable for operation of MTP cells 112, and operations to program (write) or read OTP cells 114. Still further, memory operations can include processes for generating PUF data on individual PUF cells 116, or on a group(s) of PUF cells 116 defining a differential PUF bit. Instructions for implementing memory operations according to the various characterizations can be stored in trim instructions 122. Memory cell operations can be implemented in response to a command from an external device (by way of command/data interface 130, for example), which can be implemented by a manufacturer post-fabrication of integrated circuit device 100, by a distributor or reseller of integrated circuit device 100 after fabrication, by an end-user as part of a chip calibration routine, or as a dynamic process during operation of integrated circuit device 100, according to various embodiments. As an illustrative example, a host device communicatively coupled to integrated circuit device 100 can issue a host command to generate PUF data. In at least some disclosed embodiments, a host command to generate PUF data can be part of an MPC secret data generation, where the secret data, one or more shards of the secret data or a suitable combination of the foregoing are generated at PUF cells 116 with a PUF data generation operation. In various embodiments, trim instructions 122 can store protocols to implement memory operations for MTP cells 112, OTP cells 114 and PUF cells 116 consistent with those characterizations.

Also illustrated in integrated circuit device 100 is an input(s) 140 and output(s) 150. In some embodiments, input(s) 140 can include (or provide a pathway for) data to be stored within array(s) 110 of two-terminal resistive-switching memory cells, such as MTP cells 112 or OTP cells 114. Output(s) 150 can output data stored within resistive switching devices of array(s) 110. In some embodiments, output(s) 150 can output data that results from computations utilizing data stored in two-terminal resistive-switching memory cells.

A command/data interface 130 is provided to receive memory commands from an external device and respond to those commands. Further, data to be written to array(s) 110 can be received by way of command/data interface 130, and data output from array(s) 110 can be provided over command/data interface 130. Command/data interface 130 can include a direct physical interconnect to an electronic device or a short range wireless interconnect in one or more embodiments (*e.g.,* see peer-to-peer communication 244 of Figure 2, *infra*), or can include a limited and direct communication over a wide area network in other embodiments (*e*.*g*., see optional direct & limited communication 246, *infra*).

Figure 2 depicts a network diagram of an example multi-party computation (MPC) environment 200 according to alternative or additional embodiments of the present disclosure. MPC environment 200 can facilitate a secure digital transaction with high data security and application flexibility. Moreover, MPC environment 200 can be configured to facilitate backup, recovery or like applications for secure digital transactions in one or more embodiments.

A transaction on a blockchain, such as a Bitcoin transaction on the Bitcoin blockchain can be secured with a single private key. The private key can be maintained by a user on a user electronic device (*e.g.,* a self-custodial or user-custodial digital wallet device) or can be maintained by a service provider such as a digital currency exchange *(e.g.,* a non-custodial digital wallet device or service). Each variety has benefits and detriments. The self-custodial digital wallet gives the user full and exclusive control over their private key and digital cryptocurrency assets. However, losing the wallet device, password or passphrase could result in loss of the cryptocurrency assets. The non-custodial wallet preserves the private key for the user, providing convenience. But it also requires trust, as the service has full control over the cryptocurrency assets. MPC environment 200 provides a hardware wallet device(s) 230 and a MPC framework (*e*.*g*., a N of M MPC framework) that enables a user to self-validate a cryptocurrency transaction or to coordinate with a server device to validate the cryptocurrency transaction. Accordingly, MPC environment 200 can be configured to avoid any single electronic device as being fatal to recovery of cryptocurrency assets. In addition, MPC environment 200 can provide flexibility and convenience available with cloud-based digital transaction services without surrendering control over the cryptocurrency assets to the service provider. In some embodiments, MPC environment 200 can even avoid loss of multiple electronic devices as being fatal to recovery of the cryptocurrency assets, by implementing disclosed recovery methods with MPC environment 200.

In general, for blockchain applications, validation of a transaction affecting an asset registered on a blockchain is typically done by the blockchain itself. A cryptocurrency algorithm utilized by MPC environment 200 (*e.g.,* an N of M multi-party computation algorithm) can be implemented as a signing algorithm to produce or confirm a valid transaction signature associated with the transaction. As a more specific example, the cryptocurrency algorithm can utilize a MPC algorithm to generate secret data and segments of the secret data for decentralized execution of a signing algorithm. In this example, each device containing a segment of the secret data (*e.g.,* a secret data share, a private key share of a private key of a public-private key pair, *etc.*) can cooperate with other such devices to produce a valid digital signature, or validate a similarly produced digital signature, and participate in a transaction of a digital asset secured by the secret data. Moreover, the valid transaction signature can be produced while maintaining secrecy of each secret data segment.

MPC environment 200 can utilize an N of M MPC algorithm for validating a transaction (*e.g.,* a digital signature, *etc*.) associated with a cryptocurrency asset. M is a first integer defining a total number of secret data segments (*e*.*g*., private keys, private key portions, private key shares, or the like) defined for secret data securing the cryptocurrency algorithm, and N is a second integer defining a second number of the M secret data segments that are required to validate a digital signature generated by a private key share generated from the MPC algorithm. As an example, in a 3 of 3 MPC algorithm, a total number of secret data segments is 3, and a second number of the secret data segments required to validate a digital signature generated by one (or more) of the secret data segments of the MPC algorithm is also 3. Thus, for a 3 of 3 MPC algorithm, all of the secret data portions must be provided to validate (execute) the MPC algorithm. As another example, in a 2 of 3 MPC algorithm, the total number of secret data segments defined for the 2 of 3 MPC algorithm is 3, and the second number of secret data segments required to validate a digital signature generated by another secret data segment(s) of the MPC algorithm is (any) 2 of the 3 total secret data segments.

MPC environment 200 can include a first secret data segment: key share₁ 212 stored at a cloud server(s) device 210. Cloud server(s) device 210 can be maintained by a cryptocurrency transaction service provider, as one example. A second secret data segment: key share₂ 222 can be stored at an electronic device (*e.g.,* a computer, a mobile device, a smartphone, or the like) of a user, and one or more additional secret data segments: key share_{M} 232 can be stored at respective hardware wallet devices 230, where M is an integer greater than 2. With a single hardware wallet device 230, MPC environment 200 can model a suitable N of 3 MPC algorithm, such as a 2 of 3 MPC algorithm, a 3 of 3 MPC algorithm (or even a 1 of 3 MPC algorithm). With multiple hardware wallet devices 230 (or multiple electronic devices 220) having respective secret key shares 232 (or 222), MPC environment 200 can implement a N of 4 MPC algorithm, a N of 5 MPC algorithm, and so forth.

An example hardware wallet device 230 is shown at Figure 3, *infra.* Hardware wallet device 230 can be embodied on a single monolithic integrated circuit chip, in some embodiments of the present disclosure. Further, hardware wallet device 230 can include a secure element embedded within the monolithic chip in which secret data (or a segment(s) of secret data) can be generated and stored in PUF cells (*e.g.,* see PUF cells 116 of Figure 1, *supra*) of a resistive-switching memory technology. This can make hardware wallet device 230 and the secret data stored thereon very difficult to compromise. Note that while hardware wallet device 230 includes electronic hardware (*e*.*g*., semiconductor hardware), hardware wallet device 230 need not be exclusively hardware and can also include software, firmware, and the like for implementing executable instructions, performing computing tasks, and so on.

Where an N of M MPC algorithm utilized for MPC environment 200 defines N as M-1 (or less), a user can retain personal control over digital assets (*e*.*g*., digital currency assets, digital blockchain assets, digital legal instruments or contracts, and so forth), yet utilize cloud server(s) 210 as a backup of one or more secret key shares in the event mobile device 220 (and key share₂ 222) becomes lost, or in the event that (one of) hardware wallet device 230 (and key share_{M} 232) becomes lost, or the like *(e.g.,* see Figures 4 and 4A, *infra*)*.* As long as the user retains either key share₂ 222 or key share_{M} 232, in the 2 of 3 MPC algorithm embodiment, the user can connect with cloud server(s) 210 to access key share₁ 212 and validate the N of M MPC algorithm. Only if both key share₂ 222 and key share_{M} 232 are lost would the user risk loss of cryptocurrency assets associated with the N of M MPC algorithm. In at least one embodiment, a user can retain a backup hard wallet device 230 having a copy of key share_{M} 232 allowing recovery of cryptocurrency assets even if mobile device 220 is lost and one hardware wallet device 230 is lost (*e.g.,* see Figure 4A). In another embodiment, the backup hardware wallet device 230 can have a key share_{M+1} to replace the key share_{M} 232, and as long as the N of M MPC algorithm defines N as no larger than 2, a user can validate the N of M cryptocurrency algorithm and recover cryptocurrency assets with just two devices: the backup hardware wallet device 230 and key share_{M+1} and cloud server(s) 210 and key share₁ 212. Alternatively, MPC environment 200 can define multiple backup hardware wallet devices 230 with respective key share 232. In such embodiment, as long as a N-1 numbers of backup hardware wallet devices 230 and respective key shares 232 are available for connecting with cloud server(s) 210, the cryptocurrency algorithm can be validated (*e*.*g*., with a 3 of 5 cryptocurrency algorithm, two backup hardware wallet devices 230 and respective key shares can be coupled with cloud server 210 and key share₁ 212 to validate the 3 of 5 MPC algorithm, even if both mobile device 220 and hardware wallet device 230 are lost).

In various embodiments, network communication capability of hardware wallet device(s) 230 can be limited to protect security of key share_{M} 232. In an embodiment, hardware wallet device(s) 230 can be limited to a local-only communication 244 with mobile device 220. Local-only communication 244 can be a smartcard port within mobile device 220 that can physically receive and communicatively couple to hardware wallet device(s) 230, or a similar port that can physically receive and communicatively couple to hardware wallet device(s) 230, such as a USB card port, a sim card port, and so forth. In other embodiments, local-only communication 244 can be a physical communication connection such as a wired USB connection, an IEEE 1394 connection, serial connection, parallel connection, or other suitable wired communication bus connection. In still other embodiments, local-only communication 244 can be a local-only wireless connection, such as a Bluetooth^{®} connection, a personal wireless network, or similar. Where hardware wallet device(s) 230 has no communication with cloud server(s) 210, mobile device 220 can serve as the common communication device between hardware wallet device(s) 230 and cloud server(s) 210 for MPC environment 200.

In at least some embodiments, hardware wallet device(s) 230 can be configured to establish an optional remote communication 246 with cloud server(s) 210, to enable communication between cloud server(s) 210 and hardware wallet device(s) 230 without requiring mobile device 220 as a platform to establish remote communication 242 between mobile device 220 and cloud server(s) 210. In such embodiments, optional remote communication 246 can be a Wi-Fi connection, a cellular internet connection, or other long-range public or private communication network. In other embodiments, optional remote communication 246 can be a dedicated connection, an encrypted connection, such as a virtual private network (VPN) connection, and so forth. Optional remote communication 246 can render MPC environment 200 a fully symmetric MPC network in which any N secret data segments (212, 222, 232) on respective devices *(e.g.,* cloud device(s) 210, mobile device(s) 220 or hardware wallet device(s) 230) can cooperate to execute, validate or the like, MPC digital signature algorithms based on the N of M validation framework described herein.

Figure 3 depicts a block diagram of an example integrated circuit device implemented as a crypto hardware wallet device on a single monolithic chip (hardware wallet device) 300, according to various aspects of the disclosed embodiments. Hardware wallet device 300 can include a microcontroller unit (MCU) 330, an on-chip non-volatile memory 320 (*e.g.,* resistive memory: ReMEM, phase change memory (PCM), programmable metallization memory, magneto-resistive memory (MRAM), among others, which are referred to hereinafter as on-chip ReMEM 320 for convenience) and a volatile memory 310, as shown. MCU 330 can include an embedded memory 332 (volatile or non-volatile) in one or more embodiments, which can include at least a portion of on-chip ReMEM 320 or can be separate from and in addition to on-chip ReMEM 320, in further embodiments. On-chip ReMEM 320 can store application code for execution at MCU 330. Volatile memory 310 can be utilized for operating data associated with executing application code at MCU 330, at least a portion of which can also be stored at embedded memory 332, where suitable.

In conjunction with executing a cryptographic application(s), MCU 330 can communicate with a secure element 340. As disclosed herein, MCU 330, on-chip ReMEM 320 and volatile memory 310 can be embedded together with secure element 340 (and its sub-components) in a single monolithic chip on a single substrate, in various embodiments. This monolithic integration can enhance security of communications between MCU 330 and secure element 340. Moreover, secure element 340 can include hardware-encoded security, secret data or cryptocurrency-related algorithms 342 (which can include, *e.g.,* digital signature algorithms, signature validation algorithms, blockchain validation algorithms, *etc.*), or other algorithms for application security, user security, digital asset security, or digital transaction security, or suitable combinations of the foregoing, and are hereinafter referred to as hardware encoded security algorithms 342 for convenience. These algorithms can be implemented as sets of logic primitives in aspects of the disclosed embodiments, that when executed in a suitable sequence can perform one of the foregoing algorithms, such as a cryptocurrency validation or transaction algorithm. As a brief example, respective logic primitives can define a user authentication process, a cryptocurrency hash algorithm and a validation of a cryptocurrency transaction that when executed in sequence effect a user authentication, cryptocurrency hash computation and a validation of a cryptocurrency transaction.

Hardware encoded security algorithms 342 can be executed in response to a command(s) received at secure element 340 from MCU 330. Where embodying cryptographic primitives, hardware encoded security algorithms 342 can receive commands (or command arguments) specifying a sequence order of executing a plurality of primitives that implement an algorithm more complex than individual primitives. Moreover, different subsets of primitives or different sequences, or combinations thereof, can each implement different algorithms, as would be known in the art or reasonably conveyed to one of ordinary skill in the art by way of the context provided herein.

In a particular example, hardware encoded security algorithms 342 can include hardware logic encoding MPC digital signature and signature validation algorithms (referred to hereinafter as MPC sign and validation algorithms 343). MPC sign and validation algorithms 343 can be utilized to generate or participate in generation of secret data and secret data segments for MPC digital signature applications and MPC signature validation applications. By encoding MPC sign and validation algorithms 343 in hardware encoded logic, even as a set of logic primitives as introduced above, highly intensive MPC digital signature and MPC signature validation processes can be executed quickly and efficiently, enhancing user experience of such processes when utilizing hardware wallet device 300.

Secure element 340 can include an embedded ReMEM 346. Embedded ReMEM 346 can include a secret storage 348 that includes secret data. In at least one embodiment, embedded ReMEM 346 can optionally be set to no read / no write to prevent access to secret storage 348. In such embodiment(s), embedded ReMEM 346 can have limited processing logic to process a simple query associated with the secret data stored in secret storage 348, without exposing the secret data external to embedded ReMEM 346. The simple query can confirm a hash algorithm, confirm an encryption/decryption result, or the like, initiated with the secret data. In other embodiments, embedded ReMEM 346 can permit access to secret storage 348 on a limited basis. For example, hardware encoded security algorithms 342 can be permitted to access secret storage 348, but nothing external to secure element 340, in an embodiment(s). Secure element 340 (or embedded ReMEM 346) can be configured to differentiate commands, data requests, and the like, originating at hardware encoded security algorithms 342 from requests originating external to secure element 340, in such embodiment(s).

In one or more embodiments, secure element 340 can include optional volatile memory 344. Optional volatile memory 344 can be utilized as working memory to store values of hardware encoded security algorithms 342. As one example, where a hardware encoded security algorithm 342 involves execution of multiple logic primitives, a data value(s) resulting from execution of a first logic primitive (*e*.*g*., a MPC signature validation) can be held at optional volatile memory 344 and accessed by a subsequent logic primitive (*e*.*g*., a cryptocurrency transaction depending on successful MPC signature validation) to produce a second data value(s), and so on.

In some embodiments of the present disclosure, hardware wallet device 300 can include an optional communication interface 350. Optional communication interface 350 can be configured to provide limited communication with an external device, or network. This limited communication can facilitate participation in an MPC algorithm, such as MPC secret data generation, MPC digital signature or MPC signature validation, or the like. Alternatively, or in addition, this limited communication can facilitate receipt and storage of an encrypted secret data segment(s) (and associated decryption data) of one or more computing devices participating in MPC secret data generation and segmentation. In yet another example, this limited communication can facilitate transmission of an encrypted secret data segment generated in part by hardware wallet device 300 and associated decryption data to another device for backup storage. In still further examples, this limited communication can facilitate login to a recovery service and recovery of an encrypted secret data segment and associated decryption data, to recover data lost by another hardware wallet device 300 at hardware wallet device 300 so that the latter can participate in a MPC algorithm, or to facilitate recovery of such encrypted secret data segment and decryption data for another computing device to participate in the MPC algorithm *(e.g.,* see Figure 4A, *infra*). In at least some embodiments, the limited communication can facilitate validation of a device against data stored at secret storage 348, authentication of user credentials, executing a cryptographic algorithm, participating in a blockchain validation algorithm, or participating in a multi-party computation (MPC) process associated with any of the foregoing or associated with a like operation.

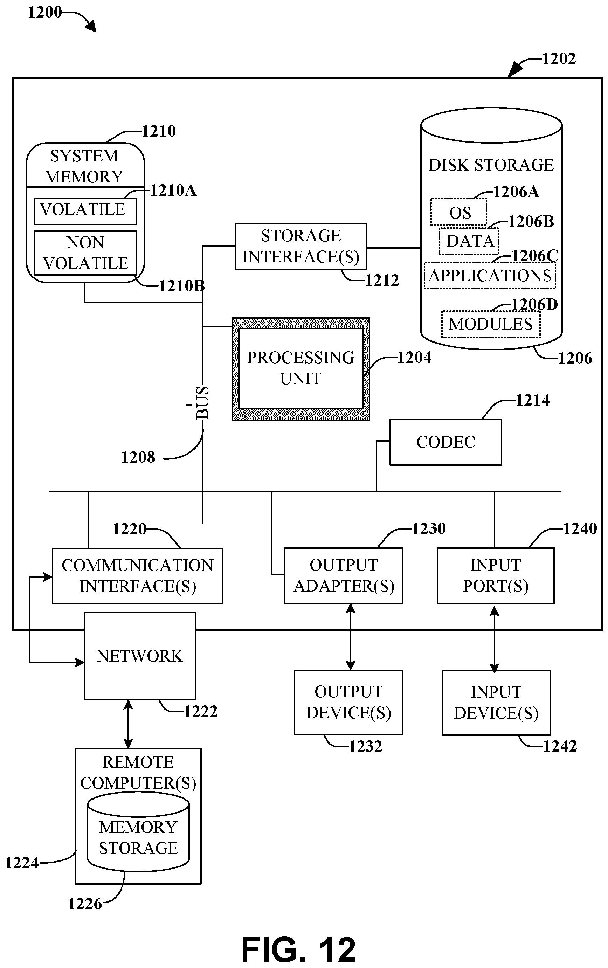

In some embodiments, optional communication interface 350 can be limited to hardware communication protocols such as a short-range wired communication protocol (*e.g.,* universal serial bus (USB), Ethernet bus, Firewire (IEEE 1394) bus, high speed Serial Peripheral Interface (SPI), a parallel interface, or the like; see Figure 12, *infra).* In other embodiments, optional communication interface 350 can be limited to a short-range wireless interface such as a Wi-Fi interface, a Bluetooth^{®} interface, a personal area network (PAN), or similar. In at least one embodiment, optional communication interface 350 can be a dedicated and limited wide area network interface (*e.g.,* a limited Internet connection) having only a set of target Internet Protocol addresses for which communication is permitted, such as an IP address of a cloud service provider's server equipment (*e.g.,* cloud device(s) 210 of Figure 2, *supra*).

Internally, hardware wallet device 300 can provide different communication bus structures for communications among components thereof. An MCU bus 335 can provide communications between MCU 330 and volatile memory 310 and on-chip ReMEM 320. MCU bus 335 can be an unrestricted bus, facilitating all suitable electronic communication between a processor and memory(ies) as known in the art. In addition, an SE bus 345 can facilitate communication between MCU 330 and SE 340. In at least some embodiments, SE bus 345 can be a limited communication bus. For instance, where MCU 330 is a multi-core processor, SE bus 345 can permit communication between MCU 330 and SE 340 originating at a first core of the multi-core processor (*e.g.,* an authorized core; a core having a valid authorization code, *etc.*) and can deny communication between MCU 330 and SE 340 originating at a second core of the multi-core processor (*e*.*g*., an unauthorized core; a core not having the valid authorization code, *etc*.). As another example, SE bus 345 can permit communication between MCU 330 and SE 340 for an application, a process, or a logic thread being executed by MCU 330 that is authorized to communicate with SE 340, or for a process or logic being executed at hardware encoded security algorithms 342 that is authorized to communicate with MCU 330, or to utilize MCU 330 and optional communication interface 350 to communicate with an external device(s) (*e*.*g*., participate in a MPC data generation, signature, signature validation, backup or recovery process), or a suitable combination of the foregoing *(e.g.,* see U.S. Patent Application No. 18/218,948, incorporated by reference hereinabove, at Figures 3-5 and associated written descriptions, among others thereof).

Figure 4 depicts a block diagram of an example system 400 for backup of MPC secret data in further embodiments of the present disclosure. System 400 includes one or more computing device(s) 220 communicatively connected to one or more cloud device(s) 210 by way of remote communication 242, and communicatively connected to one or more hardware wallet device(s) 230 by way of a peer-to-peer communication 244. Hardware wallet device 230 can optionally be communicatively connected to cloud device(s) 210 by an optional direct & limited communication 246, in one or more embodiments. System 400 can implement a MPC decentralized generation of secret data (*e.g.,* an MPC encryption key), from which a set of secret data segments can be formed at respective devices 210, 220, 230 and optionally where a combined key (incorporating all data segments) is not revealed to any single computing device 210, 220, 230. The secret data segments formed at (or optionally distributed to) respective devices of system 400 can be stored therein. For instance, cloud device(s) 210 can generate and store a first key share₁ 212, computing device(s) 220 can generate and store a second key share₂ 222 and hardware wallet device(s) 230 can generate and store a M^{th} key share_{M} 232, where M is an integer greater than 2. For values of M greater than three, system 400 can include additional computing devices 220 or additional hardware wallet devices 230 (or, optionally, an additional cloud device(s) 210) - communicatively connected by respective remote communications 242, peer-to-peer communications 244 or optional direct & limited communications 246, as suitable - at which additional secret data segments can be generated and stored.

Computing device(s) 220 can include an encryption application 420 configured to encrypt key share₂ 222 utilizing encryption data, and generate an encrypted key share₂ 422 (or more generally, an encrypted secret data segment₂ 422 of a segment of secret data). The encryption data can be utilized to generate decryption data that can be combined with encrypted key share₂ 422 to reproduce key share₂ 222. Moreover, in at least one embodiment of the present disclosure, the decryption data can be segmented into multiple decryption data portions, (also referred to herein as decryption data shards, or decryption key shards, or the like) identified as backup key portion_{2.1} 423 and backup key portion_{2.2} 424. A copy of encrypted key share₂ 422 can be stored at cloud device(s) 210 and hardware wallet device 230, along with one of the decryption data portions. Specifically: backup key portion_{2.1} 423 can be stored at cloud device(s) 210 and backup key portion_{2.2} 424 can be stored at hardware wallet device 230. To recover key share₂ 222 then at a computing device not included in system 400 (*e.g.,* if computing device 220 is lost), a new computing device (not depicted, but see Figures 5-7, *infra*) can login to a recovery application 410 at cloud device(s) 210 and, with hardware wallet device 230 connected to the new computing device or cloud device(s) 210, recovery application 410 can facilitate providing encrypted key share₂ 422, backup key portion_{2.1} 423 and backup key portion_{2.2} 424 to the new computing device. The new computing device can then combine backup key portion_{2.1} 423 and backup key portion_{2.2} 424 to regenerate the decryption data, and combine the decryption data with encrypted key share₂ 422 to recover key share₂ 222.

Similarly, hardware wallet device 230 can include an encryption application 430 configured to encrypt key share_{M} 232 utilizing second encryption data, and generate an encrypted key share_{M} 432 (or more generally, an encrypted secret data segment_{M} 432 of a segment of secret data). The second encryption data can be utilized to generate second decryption data that can be combined with encrypted key share_{M} 432 to reproduce key share_{M} 232. Moreover, in at least one embodiment of the present disclosure, the second decryption data can be segmented into multiple second decryption data portions, identified as backup key portion_{M.1} 433 and backup key portion_{M.2} 434. A copy of encrypted key share_{M} 432 can be stored at cloud device(s) 210 and computing device(s) 220, along with one of the second decryption data portions. Specifically: backup key portion_{M.1} 433 can be stored at cloud device(s) 210 and backup key portion_{M.2} 434 can be stored at computing device 220. To recover key share_{M} at a computing device, hardware wallet device, *etc.,* not included in system 400, a new such device can login to recover application 410 at cloud device(s) 210 and, with computing device(s) 220 connected to cloud device(s) 210 (and optionally to the new device), recovery application 410 can facilitate providing encrypted key share_{M} 432, backup key portion_{M.1} 433 and backup key portion_{M.2} 434 to the new device. The new device can then combine backup key portion_{M.1} 433 and backup key portion_{M.2} 434 to regenerate the second decryption data, and combine the second decryption data with encrypted key share_{M} 432 to recover key share_{M} 232.

Login to recovery application 410 can utilize a variety of secret login mechanisms. Examples include a username and password, biometric information (optionally updated over time to capture changes in user biometric data over time), multi-factor authentication (*e*.*g*., two-factor authentication, and so on), or the like, or a suitable combination of the foregoing. Similarly, encryption application 420 (and encryption application 430) can utilize a username and password to generate the encryption data/decryption data (and second encryption data/second decryption data), or biometric information, multi-factor authentication information, and so forth.

Figure 4A depicts a block diagram of an example system 400A for backup of MPC secret data in alternative or additional embodiments of the present disclosure. System 400A can include a MPC communication between one or more computing devices 420A, a cloud device(s) 410A and a primary hardware wallet device 430A. Secret data generated as part of the MPC communication can be segmented into a first key share₁ 212 retained at cloud device(s) 410A, a second key share₂ 222 retained at computing device(s) 420 and a M^{th} key share_{M} 232 retained at primary hardware wallet device(s) 430A. Computing device 420A and primary hardware wallet device(s) 430A can generate respective encrypted key shares and backup decryption key segments, as described above at Figure 4, *supra.* Cloud device(s) 410A is shown coupled with a recovery storage 422A that stores a copy of encrypted key share₁ 422 and encrypted key share_{M} 432, as well as backup key portion_{2.1} 423 and backup key portion_{M.1} 433. Similar to system 400, primary hardware wallet device(s) 430A can store a copy of encrypted key share₂ 422 and backup key portion_{2.2} 424, and computing device(s) 420A can store a copy of encrypted key share_{M} 432 and backup key portion_{M.2} 434.

System 400A also provides a secondary long term storage device(s) 440A that can also store copies of data retained at recovery storage 422A. Thus, secondary long term storage device(s) 440A can store copies of encrypted key share₂ 422, backup key portion_{2.1} 423, encrypted key share_{M} 432 and backup key portion_{M.1} 433. Although not depicted, secondary long term storage device(s) 440A can have a recovery application (*e*.*g*., similar to recover application 410 of Figure 4) allowing a user to validate security information maintained by the recovery application, and upon successful validation, retrieve the copies of encrypted key shares and backup key portions stored at secondary long term storage device(s) 440A. System 400A therefore allows a user to have full control over backup and recovery opportunities for MPC generated security data by replicating the backup and recovery information stored at recovery storage 422A of cloud device(s) 410A at a secondary long term storage device(s) 440A retained in the possession of the user. In various embodiments, multiple copies of secondary long term storage device 440A can be utilized with system 400A, enabling the user to have possession of multiple copies of backup and recovery information storage, in addition to the backup and recovery information stored at cloud device(s) 410A. Accordingly, system 400A facilitates greater redundancy in backup and recovery of MPC generated security data as provided herein.

Figure 5 illustrates a diagram of an example communication environment 500 for recovery of data for an N x M MPC cryptographic security algorithm, according to further embodiments of the present disclosure. Communication environment 500 includes a computing device(s) 520, having a recovery application 522 stored therein, in communication with a recovery server 512 of a cloud recovery system 510. Recovery application 522 forms a (secure) communication with recovery server 512 and facilitates provision of recovery login data 524 to recovery server 512. Upon successful login to recovery server 512, recovery server 512 can access a recovery storage 514 for an encrypted key share₂ 422 and backup key portion_{2.1} 423 associated with recovery login data. The encrypted key share₂ 422 and backup key portion_{2.1} 423 can be transmitted to computing device(s) 520 for use in MPC digital signature algorithms, such as signature generation, signature validation, and so forth. In various embodiments, access to hardware wallet device 530 may also be necessary for computing device(s) 520 to obtain a second backup key portion_{2.2} 424 to decrypt encrypted key share₂ 422 at computing device(s) 520. In at least one embodiment, computing device(s) 520 can communicatively couple directly to hardware wallet device 530 to obtain the second backup key portion_{2.2} 424.

In further embodiments, a hardware wallet device(s) 530 *(e.g.,* a primary hardware wallet device, or a secondary hardware wallet device 430A) can also be connected to cloud recovery 510 by way of an optional direct and limited communication 246 between primary hardware wallet device(s) 530 and cloud recovery 510. In such embodiments, recovery server 512 can operate as an interface to hardware wallet device(s) 530 and the key share(s) 434 and backup key portion(s) 436 stored therein. Where hardware wallet device(s) 530 is a secondary long term storage device(s) 440A as described in Figure 4A, *supra,* recovery server 512 can access copies of encrypted keys and backup key portions stored therein as well, as needed.

It should be noted that computing device(s) 520 need not have been a participant in an MPC communication having generated secret data to facilitate recovery of the secret data, or portions thereof. Instead, recovery login data 524 can be utilized to associate computing device(s) 520 with the secret data (or portions thereof) to facilitate recovery of such data.

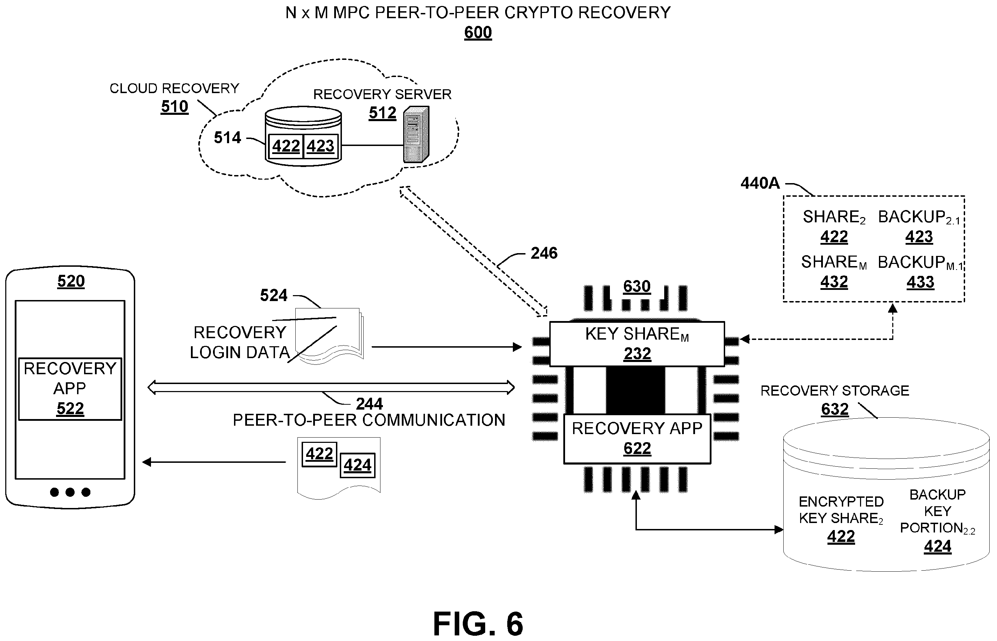

Figure 6 illustrates a peer-to-peer environment 600 for recovery of secret data generated in an N x M MPC algorithm according to still further embodiments of the present disclosure. Peer-to-peer environment 600 includes computing device(s) 520, having recovery application 522 stored therein, in communication with a (primary) hardware wallet device 630 by way of a peer-to-peer communication 244. As noted above at Figure 2, *supra,* peer-to-peer communication 244 can be a short range only communication to limit access to hardware wallet device 630 and data stored therein only to a user having possession of hardware wallet device 630. The peer-to-peer communication 244 can be a short-range wired communication (*e*.*g*., USB, Ethernet, serial bus, IEEE 1394 interface, *etc.)* or can be a short-range only wireless communication (*e*.*g*., Bluetooth, personal area network, short-range optical communication interface, magnetic communication interface, and so forth).

A recovery application 622 on hardware wallet device 630 can form a (secure) communication with recovery application 522 over peer-to-peer communication 244. Recovery application 622 can also facilitate provision of recovery login data 524 at computing device(s) 520 to recovery application 622 by way of peer-to-peer communication 244. Upon successful login to recovery application 622, computing device(s) 520 can receive an encrypted key share₂ 422 associated with the recovery login data 524 and an associated backup key portion_{2.2} 424 also associated with the recovery login data 524 and encrypted key share₂ 422. Where hardware wallet device(s) 630 is a secondary long term storage device(s) 440A as described in Figure 4A, *supra,* recovery application 622 can access copies of encrypted keys (*e.g.,* 422, 432) and backup key portions (*e*.*g*., 423, 433) stored therein as well to provide to computing device(s) 520, as needed.

In alternative or additional embodiments, peer-to-peer environment 600 can also accommodate a communication connection between hardware wallet device(s) 630 and cloud recovery 510 by way of an optional direct and limited communication 246 between hardware wallet device(s) 630 and cloud recovery 510. In such embodiments, hardware wallet device 630 can operate as an interface to recovery server 512 and recovery storage 514 of cloud recovery 510 and the key share(s) (*e.g.,* 422, 432) and backup key portion(s) (*e.g.,* 423, 433) stored therein.

It should be noted that computing device(s) 520 need not have been a participant in an MPC communication having generated secret data to facilitate recovery of the secret data, or portions thereof. Instead, recovery login data 524 can be utilized by recovery application 622 to associate computing device(s) 520 with the secret data (or portions thereof) to facilitate recovery of such data.

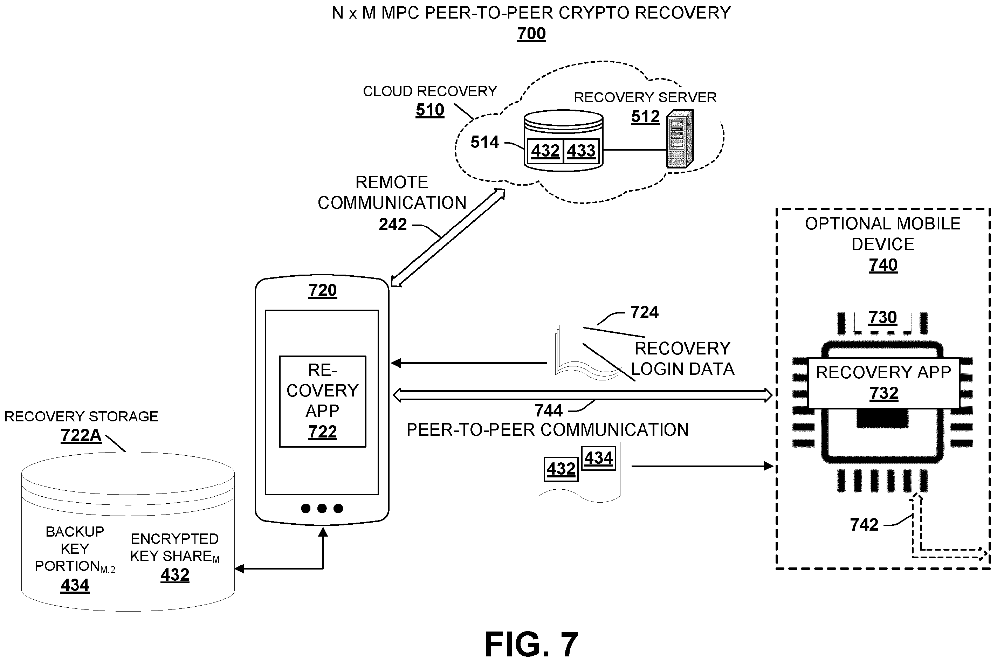

Figure 7 illustrates a peer-to-peer environment 700 for recovery of secret data generated in an N x M MPC algorithm according to still further embodiments of the present disclosure. Peer-to-peer environment 700 includes a computing device(s) 720, having a recovery application 722A stored therein, in communication with a (secondary) hardware wallet device 730 by way of a peer-to-peer communication 244. As noted above at Figure 2, *supra,* peer-to-peer communication 244 can be a short range only communication to limit access to hardware wallet device 730, recovery application 732 and a recovery storage 722A located at computing device(s) 720 and data stored therein only to a user having possession of hardware wallet device 730 and of computing device(s) 720. The peer-to-peer communication 244 can be a short-range wired communication (*e.g.,* USB, Ethernet, serial bus, IEEE 1394 interface, *etc*.) or can be a short-range only wireless communication (*e*.*g*., Bluetooth, personal area network, short-range optical communication interface, magnetic communication interface, and so forth).

A recovery application 722 on computing device(s) 720 can form a (secure) communication with recovery application 732 over peer-to-peer communication 244. Recovery application 722 can also facilitate provision of recovery login data 724 at hardware wallet device 730 to recovery application 722 by way of peer-to-peer communication 244. Upon successful login to recovery application 722, hardware wallet device 730 can receive an encrypted key share_{M} 432 associated with the recovery login data 724 and an associated backup key portion_{M.2} 434 also associated with the recovery login data 724 and encrypted key share_{M} 432.

In alternative or additional embodiments, peer-to-peer environment 700 can also accommodate a communication connection between computing device(s) 720 and cloud recovery 510 by way of a remote communication 242 between computing device(s) 720 and cloud recovery 510. In such embodiments, computing device(s) 720 can operate as an interface to recovery server 512 and recovery storage 514 of cloud recovery 510 and the key share(s) (*e*.*g*., 422, 432) and backup key portion(s) (*e*.*g*., 423, 433) stored therein. Thus, upon submitting recovery login data 724, recovery application 722 can optionally relay recovery login data 724 to recovery server 512 to acquire key share(s) or backup key portion(s) stored at recovery server 514 and associated with recovery login data 724.

It should be noted that hardware wallet device 730 need not have been a participant in an MPC communication having generated secret data to facilitate recovery of the secret data, or portions thereof. Instead, recovery login data 724 can be utilized by recovery application 722 to associate hardware wallet device 730 with the secret data (or portions thereof) to facilitate recovery of such data. Moreover, hardware wallet device 730 can optionally be communicatively coupled 742 to an optional mobile device 740 to facilitate the peer-to-peer communication 744 between hardware wallet device 730 and recovery application 732, and computing device(s) 720 and recovery application 722. Communicative coupling 742 can be a wired coupling (*e.g.,* USB cord, Ethernet cord, data-over-power cord, serial or parallel communication connection, or other suitable wired communication mechanism) or a short range wireless coupling (*e*.*g*., Bluetooth, personal area network, Wi-Fi connection, and so on).

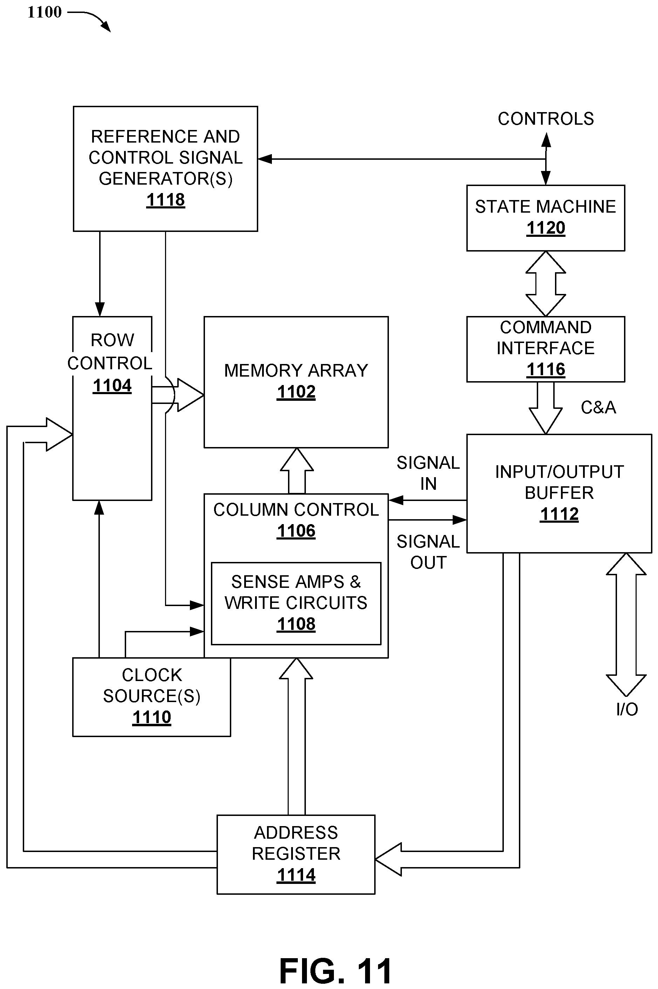

The diagrams included herein are described with respect to several electronic devices, computing devices, and a communication system facilitating backup and recovery of secret data or digital assets secured by the secret data. It should be appreciated that such diagrams can include those electronic or computing devices, communication systems, *etc.,* specified therein, some of the specified devices / systems, or additional devices / systems not explicitly depicted but known in the art or reasonably conveyed to those of skill in the art by way of the context provided herein. Components of disclosed integrated circuit devices can also be implemented as sub-components of another disclosed component (*e*.*g*., embedded memory 332 can be in part or in whole a sub-component of on-chip ReMEM 320), whereas other components disclosed as sub-components can be separate components in various embodiments (*e*.*g*., recovery storage 514 can be separate from and communicatively connected to cloud recovery 510; recovery storage 722A can be separate from and communicatively connected to computing device(s) 720, and so forth). Further, embodiments within a particular Figure of the present specification can be applied in part or in whole to other embodiments depicted in other Figures without limitation, subject only to suitability to achieving a disclosed function or purpose as understood by one of skill in the art, and *vice versa.* As illustrative (and non-limiting) examples, hardware wallet device 300 can be substituted for hardware wallet device 230 of Figure 2 or 4, primary hardware wallet device(s) 430A of Figure 4A, and so forth; MCU 330 can incorporate some or all memory array control components of Figure 11 (*e.g.,* row control 1104, sense amps 1108, column control 1106, clock source(s) 1110, address register 1114, reference and control signal(s) generator 1118, state machine 1120, input/output buffer 1112, command interface 1116), or suitable components of operating and control environment 1100 or environment 1200 can be substituted or added to other components or integrated circuit devices disclosed herein, and so forth. Additionally, it is noted that one or more disclosed processes can be combined into a single process providing aggregate functionality. For instance, a cryptographic algorithm process can include a secure user/device authentication process, or *vice* versa, to facilitate implementing backup and recovery of secret data securing a digital asset(s) and verifying proper user/device access to the secret data or digital asset(s), by way of a single process. Components of the disclosed devices and systems can also interact with one or more other components not specifically described herein but known by or reasonably conveyed to those of skill in the art.

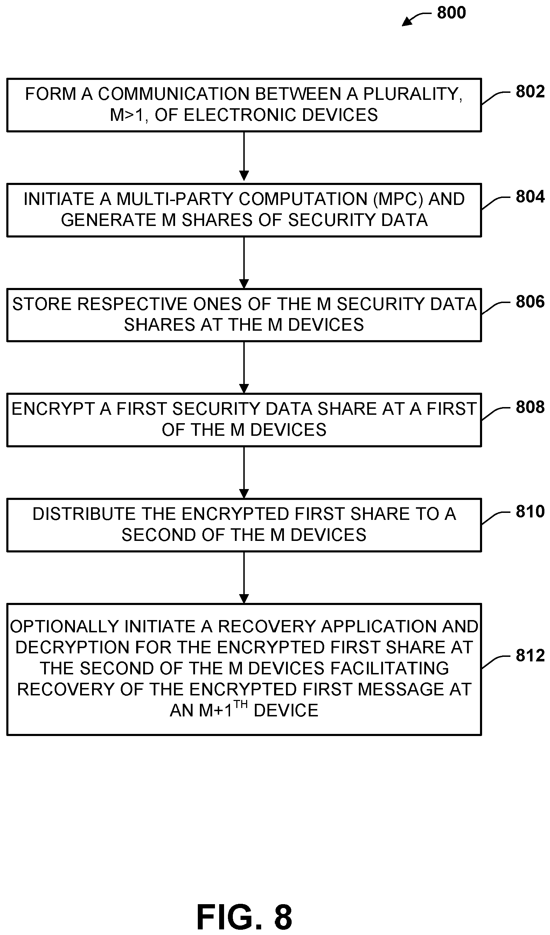

In view of the exemplary diagrams described *supra,* process methods that can be implemented in accordance with the disclosed subject matter will be better appreciated with reference to the flow charts of Figures 8-10. While for purposes of simplicity of explanation, the methods of Figures 8-10 are shown and described as a series of blocks, it is to be understood and appreciated that the claimed subject matter is not limited by the order of the blocks, as some blocks may occur in different orders or concurrently with other blocks from what is depicted and described herein. Moreover, not all illustrated blocks may be required to implement the methods described herein, and in some embodiments additional steps known in the art or reasonably conveyed to one of ordinary skill in the art by way of the context provided herein can be implemented as part of a disclosed method within the scope of the present disclosure. Moreover, some steps illustrated as part of one process can be implemented for another process where suitable; other steps of one or more processes can be added or substituted in other processes disclosed herein within the scope of the present disclosure. Additionally, it should be further appreciated that the methods disclosed throughout this specification are capable of being stored on an article of manufacture to facilitate transporting and transferring such methods to an electronic device, stored in embedded memory within the electronic device, and so forth. The term article of manufacture, as used, is intended to encompass a computer program accessible from any computer-readable device, device in conjunction with a carrier, or storage medium, or the like.

Figure 8 illustrates a flowchart of an example method 800 for backup or recovery of a digital asset, in alternative or additional aspects of the presently disclosed embodiments. At 802, method 800 can comprise forming a communication between a plurality, M>1, of electronic devices. At 804, method 800 can comprise initiating a multi-party computation (MPC) of security data and generating M segments (*e.g.,* shares *etc.*) of the security data. The security data can be utilized for securing a digital asset, such as a cryptocurrency, a digital currency, a non fungible token, a blockchain asset, a user login identifier such as a password, PIN or other identifier, a digitized legal instrument, a digitized contract or portion thereof, or the like, or a suitable combination of the foregoing. Further, at 806, method 800 can comprise storing respective data segments of the M security data segments at the respective M distinct electronic devices. The distinct devices can include one or more computing devices, one or more hardware wallet devices, a cloud service device (or multiple cloud service devices, where suitable), among others.

At 808, method 800 can comprise encrypting the Mth data segment at the Mth electronic device producing an encrypted data segment. Method 800 can further comprise generating decryption data for decrypting the encrypted data segment, and at 810, method 800 can additionally comprise distributing the encrypted data segment and the decryption data to a first of the M distinct electronic devices. At 812, method 800 can optionally comprise initiating a recovery application for the encrypted data segment and for the decryption data at least at the first of the M distinct electronic devices facilitating access to the encrypted data segment and the decryption data at an M+1^{th} device. Moreover, the M+1^{th} device can a device that was not part of the M electronic devices that participated in the MPC that generated the M security data segments of the security data.

In some embodiments of method 800, the security data is a MPC encryption key and the security data segments are M key shares generated from the MPC encryption key. In a particular aspect of such embodiments, the MPC encryption key can be generated from a N x M threshold algorithm where M defines a total number of the M key shares and N defines a second number of the M key shares required to generate a digital signature with the MPC encryption key or to validate the digital signature generated by the MPC encryption key. In further aspects, N can be an integer smaller in magnitude than M.

In further aspects of the embodiments disclosed herein, the M-1 distinct electronic devices can include a cloud server device, and can include a limited hardware wallet device. The limited hardware wallet device can be a single monolithic chip having secure data storage for storing one of the M security data segments. Further, in one or more aspects of the disclosure, the limited hardware wallet device can have a limited wireless network interface configured to form a wide area network connection exclusively to the cloud service device, or can have a local wired network interface configured to form a direct physical communication with the M^{th} device or with the M+1^{th} device, or the like, or a suitable combination of the foregoing.

Alternatively, or in addition, method 800 can further comprise, as part of initiating the recovery application, generating a password for login to the recovery application and for validating access to the encrypted data segment and the decryption data at the M+1^{th} device. In an alternative or additional aspect, method 800 can comprise validating with a security data segment stored at a hardware wallet device of the M electronic devices the login to the recovery application at a recovery device, and for validating access to the encrypted data segment and the decryption data at the M+1^{th} device. The hardware wallet device can be physically coupled to the M+ 1 ^{th} device as part of communicatively coupling the M+ 1 ^{th} device to the recovery device of the M electronic devices *(e.g.,* a cloud server device, a second computing device, a second hardware wallet device, and so forth) or the hardware wallet device can be wirelessly coupled to the M+1^{th} device as part of communicatively coupling the M+1^{th} device to the recovery device. As an example, the security data segment of the hardware wallet device can be utilized to generate a digital signature that can be validated by the recovery device (alone or in combination with the hardware wallet device or another of the M electronic devices) as part of validating the login to the recovery application, as part of validating access to the encrypted data segment and the decryption data, or the like, or a suitable combination thereof. In yet another aspect, initiating the recovery application can further comprise capturing and transmitting biometric data for login to the recovery application and for validating access to the encrypted data segment and the decryption data at the M+1^{th} device. Biometric data can be updated periodically to reflect changes in a user's biometric information, such as changes in facial appearance, eye characteristics, fingerprint characteristics, and so forth, and the recovery application can receive login biometric data and compare the login biometric data to a most recent biometric data update, in aspects of the disclosed embodiments.

According to alternative or additional aspects of the disclosed embodiments, method 800 can further comprise, as part of initiating the recovery application: generating the decryption data at the M^{th} device, and splitting the decryption data into a plurality of decryption data segments (*e*.*g*., a decryption key split into a plurality of decryption key shards). Additionally, method 800 can comprise distributing the respective decryption data segments to respective devices of the M distinct electronic devices. In some such aspects, the decryption data can be generated with an A x B threshold algorithm, in which B is an integer that defines a total number of the decryption data segments and A defines a second number of the (valid) decryption data segments that can be combined to successfully decrypt the encrypted data segment and reproduce the M^{th} data segment. A can be less than or equal to B in various such aspects.

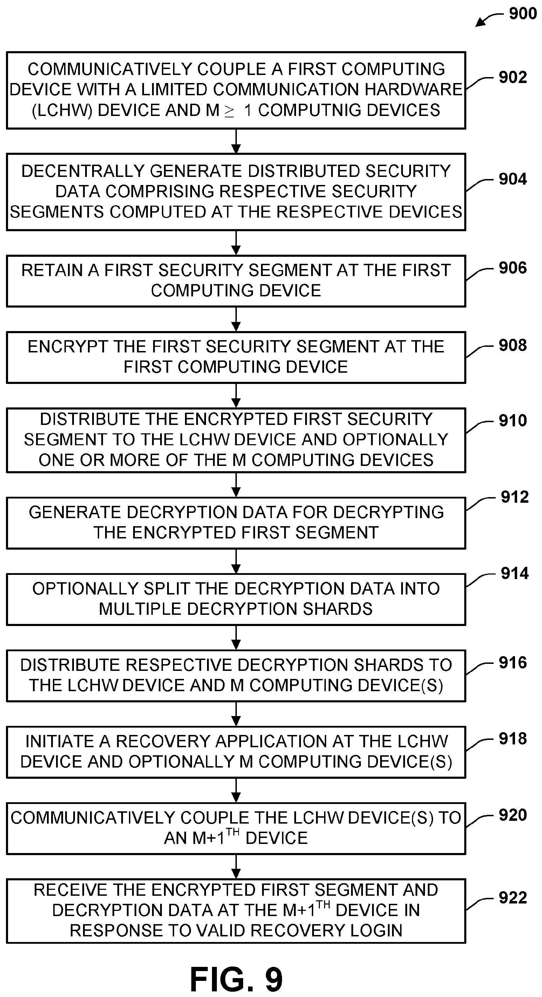

Figure 9 illustrates a flowchart of a sample method 900 for management of secret data utilized to secure a digital asset, according to still further embodiments of the present disclosure. Method 900 can comprise, at 902, communicatively coupling a first computing device with a limited communication hardware (LCHW) device and M computing devices, where M ≥ 1. At 904, method 900 can comprise de-centrally generating distributed security data comprising respective security data segments computed at the respective devices participating in the communicative coupling. In an aspect(s) of the disclosed embodiments, M can be 1 or larger. At 906, method 900 can comprise retaining (*e*.*g*., storing) respective segments of the M security data segments at the first computing device, the LCHW device and the M computing devices. The M devices can include one or more cloud devices, one or more computing device(s) and one or more LCHW wallet device(s) on a single monolithic chip structure(s) (*e*.*g*., see description hereinabove, and referred to hereinafter as: the LCHW wallet device(s)), in various aspects of the present disclosure. Communication with the LCHW wallet device(s) can be by way of a short range peer-to-peer communication with the computing device(s), or by a limited and secure communication with the cloud device such as a virtual private network (VPN) communication limited to an IP address exclusive to the cloud device and the LCHW wallet device(s), as one example.

At 908, method 900 can comprise encrypting a first security data segment at the first computing device and, at 910, method 900 can comprise distributing the encrypted first segment to the LCHW wallet device(s) and optionally to a cloud device. The LCHW wallet device(s) to which the encrypted first segment is distributed can be the (primary) LCHW wallet device utilized at reference number 904 as one of the devices participating in the de-centrally generating the distributed security data, or can be a (secondary) LCHW wallet device(s) separate from the M devices. The cloud device can be the cloud device included in the M devices, or optionally can be a separate backup or recovery cloud device.

At 912, method 900 can comprise generating decryption data for decrypting the encrypted first segment. At 914, method 900 can optionally comprise splitting the decryption data into multiple decryption shards. At 916, method 900 can further comprise distributing the decryption data (or respective shards) to the LCHW wallet device(s) and optionally to the cloud device. At 918, method 900 can comprise initiating a recovery application at the LCHW wallet device and optionally at the cloud device (or other device of the M computing devices). At 920, method 900 can comprise communicatively coupling the LCHW wallet device to an M+1^{th} device. The communicative coupling can be a short range communication, such as a wired communication, a short range wireless communication, or the like. At 922, method 900 can comprise receiving the encrypted first segment and decryption data at the M+1^{th} device in response to a valid recovery login with the recovery application. The valid recovery login can include providing valid recovery login data at the M+1^{th} device to the recovery application at the LCHW wallet device by way of the communicative coupling of such devices, providing biometric login data to the recovery application, or the like, as suitable examples.

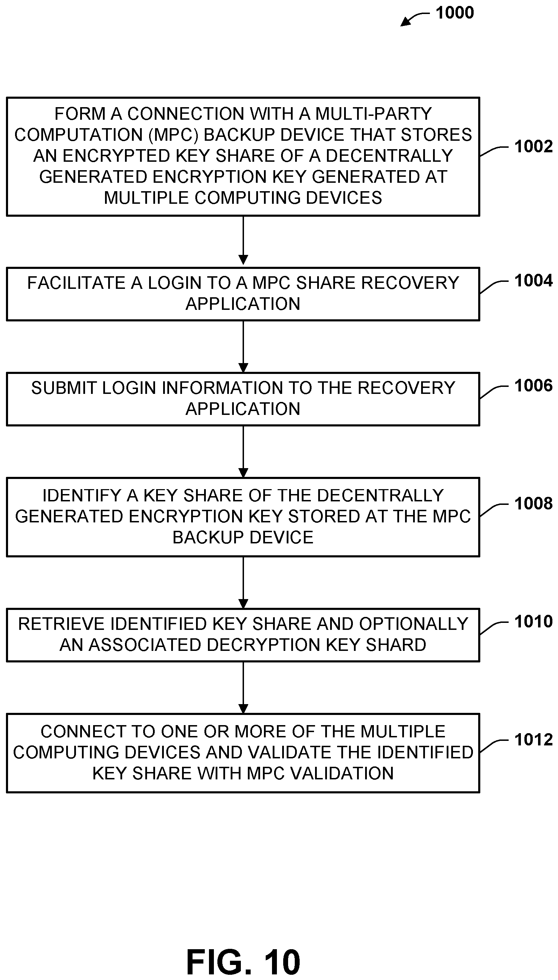

Figure 10 illustrates a flowchart of an example method 1000 for recovery of data. At 1002, method 1000 can comprise forming a connection with a multi-part computation (MPC) backup device (*e.g.,* a server device, a LCHW wallet device, *etc*.) that manages access to a first encrypted key share of a multi-party computation (MPC) encrypted key and that stores a second encrypted key share of the MPC encrypted key. The first encrypted key share can be generated at a second device different from the MPC backup device, in some aspects of the disclosed embodiments. In at least one aspect of the disclosed embodiments, forming the connection with the MPC backup device can further comprise accessing the MPC backup device from a mobile device or a LCHW wallet device that was not involved in generation of the MPC encryption key or the first encrypted key share. In alternative aspects, however, the mobile device or LCHW wallet device can be a device involved in generation of the MPC encryption key.

At 1004, method 1000 can comprise facilitating a login to a MPC share recovery application for the MPC encryption key at the MPC backup device. At 1006, method 1000 can comprise submitting login information to the recovery application.

In addition, at 1008, method 1000 can comprise providing identifying information at the recovery application that distinguishes the first encrypted key share or distinguishes the second device. In an embodiment, the identifying information can be the same as the login information. In another embodiment, the identifying information can be separate from and in addition to the login information, and can include device information identifying a device participating in generation of the MPC encrypted key, or can include user information associated with the first encrypted key share or the second encrypted key share, or can be information specific to the first encrypted key share and distinguishing the first encrypted key share from the second encrypted key share.

At 1010, method 1000 can comprise obtaining access to a decrypted first key share by accessing the first encrypted key share through the recovery application. In an aspect(s), obtaining access to the decrypted first key share can comprise retrieving the first encrypted key share from the MPC backup device, and retrieving an associated decryption key from the MPC backup device. Additionally, obtaining access can further comprise activating the decryption key to decrypt the first encrypted key share and generate a first key share of the MPC encryption key from which the first encrypted key share was formed.

In further aspects of method 1000, retrieving the decryption key from the MPC backup device and activating the decryption key can further comprise forming a second connection with a LCHW wallet device together with forming the connection with the MPC backup device. Additionally, method 1000 can comprise retrieving a first decryption key shard of the decryption key from the MPC backup device and retrieving a second decryption key shard of the decryption key from the LCHW wallet device. Moreover, method 1000 can comprise regenerating the decryption key from the first decryption key shard and the second decryption key shard at the second device and utilizing the decryption key at the second device to decrypt the first encrypted key share.

In an optional aspect of method 1000, the second connection with the LCHW wallet device can be a connection between the LCHW wallet device and the MPC backup device over a wide area network. Alternatively, the second connection can instead be a physical connection or a short range wireless connection between the LCHW wallet device and the second device.

In another aspect of method 1000, retrieving the decryption key from the MPC backup device and activating the decryption key can further comprise forming a second connection between the MPC backup device and a computing device or between the second device and the computing device together with forming the connection with the MPC backup device. In such aspect(s), method 1000 can further comprise retrieving a first decryption key shard of the decryption key from the MPC backup device and retrieving a second decryption key shard of the decryption key from the computing device. Further, method 1000 can comprise regenerating the decryption key from the first decryption key shard and the second decryption key shard at the second device and utilizing the decryption key at the second device to decrypt the first encrypted key share. In various aspects, the second device can be a LCHW wallet device coupled to the MPC backup device by an address limited wide area connection and optionally coupled to the computing device by a physical wired communication connection.

### EXAMPLE OPERATING ENVIRONMENTS

Figure 11 illustrates a block diagram of an example operating and control environment 1100 for a memory array 1102 of a memory device according to aspects of the subject disclosure. Control environment 1100 and memory array 1102 can be formed within a single semiconductor die in some embodiments, although the subject disclosure is not so limited and in other embodiments some components of control environment 1100 can be formed on a separate semiconductor die communicatively connected with the semiconductor die. In at least one aspect of the subject disclosure, memory array 1102 can comprise memory selected from a variety of memory cell technologies. In at least one embodiment, memory array 1102 can comprise a two-terminal memory technology, arranged in a compact two or three-dimensional architecture. Suitable two-terminal memory technologies can include resistive-switching memory, conductive-bridging memory, phase-change memory, organic memory, magneto-resistive memory, or the like, or a suitable combination of the foregoing. In a further embodiment, the two-terminal memory technology can be a two-terminal resistive switching technology.

A column controller 1106 and sense amps 1108 can be formed adjacent to memory array 1102. Moreover, column controller 1106 can be configured to activate (or identify for activation) a subset of bit lines of memory array 1102. Column controller 1106 can utilize a control signal(s) provided by a reference and control signal generator(s) 1118 to activate, as well as operate upon, respective ones of the subset of bitlines, applying suitable program, erase or read voltages to those bitlines. Non-activated bitlines can be kept at an inhibit voltage (also applied by reference and control signal generator(s) 1118), to mitigate or avoid bit-disturb effects on these non-activated bitlines.

In addition, operating and control environment 1100 can comprise a row controller 1104. Row controller 1104 can be formed adjacent to and electrically connected with word lines of memory array 1102. Also utilizing control signals of reference and control signal generator(s) 1118, row controller 1104 can select one or more rows of memory cells with a suitable selection voltage. Moreover, row controller 1104 can facilitate program, erase or read operations by applying suitable voltages at selected word lines.

Sense amps 1108 can read data from, or write data to, the activated memory cells of memory array 1102, which are selected by column control 1106 and row control 1104. Data read out from memory array 1102 can be provided to an input/output buffer 1112. Likewise, data to be written to memory array 1102 can be received from the input/output buffer 1112 and written to the activated memory cells of memory array 1102.

A clock source(s) 1110 can provide respective clock pulses to facilitate timing for read, write, and program operations of row controller 1104 and column controller 1106. Clock source(s) 1110 can further facilitate selection of word lines or bit lines in response to external or internal commands received by operating and control environment 1100. Input/output buffer 1112 can comprise a command and address input, as well as a bidirectional data input and output. Instructions are provided over the command and address input, and the data to be written to memory array 1102 as well as data read from memory array 1102 is conveyed on the bidirectional data input and output, facilitating connection to an external host apparatus, such as a computer or other processing device (not depicted, but see e.g., computer 1202 of Figure 12, *infra).*

Input/output buffer 1112 can be configured to receive write data, receive an erase instruction, receive a status or maintenance instruction, output readout data, output status information, and receive address data and command data, as well as address data for respective instructions. Address data can be transferred to row controller 1104 and column controller 1106 by an address register 1114. In addition, input data is transmitted to memory array 1102 *via* signal input lines between sense amps 1108 and input/output buffer 1112, and output data is received from memory array 1102 *via* signal output lines from sense amps 1108 to input/output buffer 1112. Input data can be received from the host apparatus, and output data can be delivered to the host apparatus *via* the I/O bus.

Commands received from the host apparatus can be provided to a command interface 1116. Command interface 1116 can be configured to receive external control signals from the host apparatus and determine whether data input to the input/output buffer 1112 is write data, a command, or an address. Input commands can be transferred to a state machine 1120.

State machine 1120 can be configured to manage programming and reprogramming of memory array 1102 (as well as other memory banks of a multi-bank memory array). Instructions provided to state machine 1120 are implemented according to control logic configurations, enabling state machine 1120 to manage read, write, erase, data input, data output, and other functionality associated with memory cell array 1102. In some aspects, state machine 1120 can send and receive acknowledgments and negative acknowledgments regarding successful receipt or execution of various commands. In further embodiments, state machine 1120 can decode and implement status-related commands, decode and implement configuration commands, and so on.

To implement read, write, erase, input, output, *etc.,* functionality, state machine 1120 can control clock source(s) 1110 or reference and control signal generator(s) 1118. Control of clock source(s) 1110 can cause output pulses configured to facilitate row controller 1104 and column controller 1106 implementing the particular functionality. Output pulses can be transferred to selected bit lines by column controller 1106, for instance, or word lines by row controller 1104, for instance.

In connection with Figure 12, the systems, devices, and/or processes described herein can be embodied within hardware, such as a single integrated circuit (IC) chip, multiple ICs, an application specific integrated circuit (ASIC), a computing device or devices, a server device or array of server devices such as implemented in a networked server (or cloud) service, or the like. Further, the order in which some or all of the process blocks appear in each process should not be deemed limiting. Rather, it should be understood that some of the process blocks can be executed in a variety of orders, not all of which may be explicitly illustrated herein.

With reference to Figure 12, a suitable environment 1200 for implementing various aspects of the claimed subject matter includes a computer 1202. The computer 1202 includes a processing unit 1204, a system memory 1210, a codec 1214, and a system bus 1208. The system bus 1208 couples system components including, but not limited to, the system memory 1210 to the processing unit 1204. The processing unit 1204 can be any of various available processors. Dual microprocessors and other multiprocessor architectures also can be employed as the processing unit 1204.

The system bus 1208 can be any of several types of bus structure(s) including the memory bus or memory controller, a peripheral bus or external bus, or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), Small Computer Systems Interface (SCSI), Compute eXpress Link (CXL), high speed Serial Peripheral Interface (SPI) interfaces (*e*.*g*., HyperFlash, and so forth), Inter-Integrated Circuit (I²C) communication protocol, I³C protocol, *etc.*

The system memory 1210 includes volatile memory 1210A and non-volatile memory 1210B. The basic input/output system (BIOS), containing the basic routines to transfer information between elements within the computer 1202, such as during start-up, is stored in non-volatile memory 1210B. In addition, according to present innovations, codec 1214 may include at least one of an encoder or decoder, wherein the at least one of an encoder or decoder may consist of hardware, software, or a combination of hardware and software. Although codec 1214 is depicted as a separate component, codec 1214 may be contained within non-volatile memory 1210B. By way of illustration, and not limitation, non-volatile memory 1210B can include read only memory (ROM), programmable ROM (PROM), electrically programmable ROM (EPROM), electrically erasable programmable ROM (EEPROM), or flash memory, two-terminal memory, and so on. Volatile memory 1210A includes random access memory (RAM), and in some embodiments can embody a cache memory. By way of illustration and not limitation, RAM is available in many forms such as static RAM (SRAM), dynamic RAM (DRAM), synchronous DRAM (SDRAM), double data rate SDRAM (DDR SDRAM), and enhanced SDRAM (ESDRAM).

Computer 1202 may also include removable/non-removable, volatile/non-volatile computer storage medium. Figure 12 illustrates, for example, disk storage 1206. Disk storage 1206 includes, but is not limited to, devices like a magnetic disk drive, solid state disk (SSD) floppy disk drive, tape drive, Jaz drive, Zip drive, LS-100 drive, flash memory card, or memory stick. In addition, disk storage 1206 can include storage medium separately or in combination with other storage medium including, but not limited to, an optical disk drive such as a compact disk ROM device (CD-ROM), CD recordable drive (CD-R Drive), CD rewritable drive (CD-RW Drive), a digital versatile disk ROM drive (DVD-ROM), a Blu-Ray Disc^{®}, and so forth. To facilitate connection of the disk storage devices 1206 to the system bus 1208, a removable or non-removable interface is typically used, such as storage interface 1212. It is appreciated that storage devices 1206 can store information related to a user. Such information might be stored at or provided to a server or to an application running on a user device. In one embodiment, the user can be notified (*e.g.,* by way of output device(s) 1232) of the types of information that are stored to disk storage 1206 or transmitted to the server or application. The user can be provided the opportunity to opt-in or opt-out of having such information collected and/or shared with the server or application (*e*.*g*., by way of input from input device(s) 1242).

It is to be appreciated that Figure 12 describes software that acts as an intermediary between users and the basic computer resources described in the suitable operating environment 1200. Such software includes an operating system 1206A. Operating system 1206A, which can be stored on disk storage 1206, acts to control and allocate resources of the computer system 1202. Applications 1206C take advantage of the management of resources by operating system 1206A through program modules 1206D, and program data 1206D, such as the boot/shutdown transaction table and the like, stored either in system memory 1210 or on disk storage 1206. It is to be appreciated that the claimed subject matter can be implemented with various operating systems or combinations of operating systems.

A user enters commands or information into the computer 1202 through input device(s) 1242. Input devices 1242 include, but are not limited to, a pointing device such as a mouse, trackball, stylus, touch pad, keyboard, keypad, touch screen, microphone, joystick, game pad, satellite dish, scanner, TV tuner card, digital camera, digital video camera, web camera, and the like. These and other input devices connect to the processing unit 1204 through the system bus 1208 *via* input port(s) 1240. Input port(s) 1240 include, for example, a serial port, a parallel port, a game port, and a universal serial bus (USB). Output device(s) 1232 uses some of the same type of ports as input device(s) 1242. Thus, for example, a USB port may be used to provide input to computer 1202 and to output information from computer 1202 to an output device 1232. Output adapter 1230 is provided to illustrate that there are some output devices 1232 like monitors, speakers, and printers, among other output devices 1232, which require special adapters. The output adapters 1230 include, by way of illustration and not limitation, video and sound cards that provide a means of connection between the output device 1232 and the system bus 1208. It should be noted that other devices and/or systems of devices provide both input and output capabilities such as remote computer(s) 1238.

Computer 1202 can operate in a networked environment using logical connections to one or more remote computers, such as remote computer(s) 1224. The remote computer(s) 1224 can be a personal computer, a server, a router, a network PC, a workstation, a microprocessor based appliance, a peer device, a smart phone, a tablet, or other network node, and typically includes many of the elements described relative to computer 1202. For purposes of brevity, only a memory storage device 1226 is illustrated with remote computer(s) 1224. Remote computer(s) 1224 is logically connected to computer 1202 through a network 1222 and then connected *via* communication interface(s) 1220. Network 1222 encompasses wire or wireless communication networks such as local-area networks (LAN) and wide-area networks (WAN) and cellular networks. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication interface(s) 1220 refers to the hardware/software employed to connect the network 1222 to the bus 1208. While communication interface(s) 1220 is shown for illustrative clarity inside computer 1202, it can also be external to computer 1202. The hardware/software necessary for connection to the network 1222 includes, for exemplary purposes only, internal and external technologies such as, modems including regular telephone grade modems, cable modems and DSL modems, ISDN adapters, and wired and wireless Ethernet cards, hubs, and routers.

The illustrated aspects of the disclosure may also be practiced in distributed computing environments where certain tasks are performed by remote processing devices that are linked through a communications network (*e*.*g*., a multi-party computation (MPC) process or algorithm). In a distributed computing environment, program modules or stored information, instructions, or the like can be located in local or remote memory storage devices.

Moreover, it is to be appreciated that various components described herein can include electrical circuit(s) that can include components and circuitry elements of suitable value in order to implement the embodiments of the subject disclosure. Furthermore, it can be appreciated that many of the various components can be implemented on one or more IC chips. For example, in one embodiment, a set of components can be implemented in a single IC chip. In other embodiments, one or more of respective components are fabricated or implemented on separate IC chips.

In regard to the various functions performed by the above described components, architectures, circuits, processes and the like, the terms (including a reference to a "means") used to describe such components are intended to correspond, unless otherwise indicated, to any component which performs the specified function of the described component (*e*.*g*., a functional equivalent), even though not structurally equivalent to the disclosed structure, which performs the function in the herein illustrated exemplary aspects of the embodiments. In this regard, it will also be recognized that the embodiments include a system as well as a computer-readable medium having computer-executable instructions for performing the acts and/or events of the various processes.

In addition, while a particular feature may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising".

As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Further embodiments can be envisioned to one of ordinary skill in the art after reading this disclosure. For example, in various embodiments, erase operations may be initiated upon a plurality of ReRAM devices *(e.g.,* 16, 32, etc.) at the same time.

In other embodiments, combinations or sub-combinations of the above disclosed embodiments can be advantageously made. The block diagrams of the architecture and flow charts are grouped for ease of understanding. However, it should be understood that combinations of blocks, additions of new blocks, re-arrangement of blocks, and the like are contemplated in alternative embodiments of the present disclosure.
It is also understood that the examples and embodiments described herein are for illustrative purposes only and that various modifications or changes in light thereof will be suggested to persons skilled in the art and are to be included within the spirit and purview of this application and scope of the appended claims.

## Claims

1. A method for securing multi-party computation (MPC) security data, comprising:
generate security data for an encryption application for a cryptocurrency transaction;
store an integer, M of security data segments of the security data at M devices, where M is greater than one;
encrypt an M^{th} data segment at an M^{th} device producing an encrypted data segment and generate decryption data for decrypting the encrypted data segment;
distribute the encrypted data segment and the decryption data to a first of the M devices; and
initiate a recovery application for the encrypted data segment and for the decryption data at least at the first of the M devices facilitating access to the encrypted data segment and the decryption data at an M+ 1 ^{th} device.

2. The method of claim 1, wherein the security data is a MPC encryption key and the security data segments are M key shares of the MPC encryption key de-centrally generated at the respective M devices.

3. The method of claim 2, wherein the MPC encryption key is generated by a N x M threshold algorithm wherein M defines a total number of the M key shares and N defines a second number of the M key shares required to generate a digital signature with the MPC encryption key or to validate the digital signature generated by the MPC encryption key, wherein N is an integer smaller than M.

4. The method of claim 1, wherein the M devices include a cloud server device, and include a limited hardware wallet device.

5. The method of claim 4, wherein the limited hardware wallet device is a single monolithic chip having secure data storage for storing one of the M data segments and having at least one of:
a limited wireless network interface configured to form a wide area network connection exclusively to the cloud server device; or
a local wired network interface configured to form a direct physical communication with the M^{th} device or with the M+ 1 ^{th} device.

6. The method of claim 1, wherein initiating the recovery application further comprises generating a password for login to the recovery application and for validating access to the encrypted data segment and the decryption data at the M+1^{th} device.

7. The method of claim 1, wherein initiating the recovery application further comprises capturing and transmitting biometric data for login to the recovery application and for validating access to the encrypted data segment and the decryption data at the M+1^{th} device.

8. The method of claim 1, wherein initiating the recovery application further comprises:
generating the decryption data at the M^{th} device;
splitting the decryption data into a plurality of decryption data segments; and
distributing respective decryption data segments to respective devices of the M devices other than the M^{th} device.

9. A method for recovery of data, comprising:
forming a connection with a server device that manages access to a first encrypted key share of a multi-party computation (MPC) encryption key and that stores a second encrypted key share of the MPC encryption key, wherein the first encrypted key share is generated at a second device different from the server device;
facilitate a login to a recovery application for the MPC encryption key;
submit login information to the recovery application;
provide identifying information at the recovery application, wherein the identifying application distinguishes the first encrypted key share or distinguishes the second device; and
obtain access to a decrypted first key share by accessing the first encrypted key share through the recovery application.

10. The method of claim 9, wherein forming the connection with the server device further comprises accessing the server device from a mobile device or a limited connection hardware wallet device that was not involved in generation of the MPC encryption key or the first encrypted key share.

11. The method of claim 9, wherein obtaining access to the decrypted first key share further comprises:
retrieve the first encrypted key share from the server device;
retrieve a decryption key from the server device; and
activate the decryption key to decrypt the first encrypted key share and generate a first key share of the MPC encryption key from which the first encrypted key share was formed.

12. The method of claim 11, wherein retrieving the decryption key from the server device and activating the decryption key further comprises:
forming a second connection with a limited connection hardware wallet device together with forming the connection with the server device;
retrieving a first decryption key shard of the decryption key from the server device;
retrieving a second decryption key shard of the decryption key from the limited connection hardware wallet device;
regenerating the decryption key from the first decryption key shard and the second decryption key shard at the second device; and
utilizing the decryption key at the second device to decrypt the first encrypted key share.

13. The method of claim 12, wherein the second connection with the limited connection hardware wallet device is one of:
a connection between the limited connection hardware wallet device and the server device over a wide area network; or
a physical connection between the limited connection hardware wallet device and the second device.

14. The method of claim 11, wherein retrieving the decryption key from the server device and activating the decryption key further comprises:
forming a second connection between the server device and a computing device or between the second device and the computing device together with forming the connection with the server device;
retrieving a first decryption key shard of the decryption key from the server device;
retrieving a second decryption key shard of the decryption key from the computing device;
regenerating the decryption key from the first decryption key shard and the second decryption key shard at the second device; and
utilizing the decryption key at the second device to decrypt the first encrypted key share, wherein the second device is a limited connection hardware wallet device coupled to the server device by an address limited wide area connection and optionally coupled to the computing device by a physical wired communication connection.

15. A server device, comprising:
a memory for storing application instructions and application data for providing a cryptocurrency validation service for a plurality of remote devices;
a processor for executing the application instructions;
a secure storage device for storing secure data associated with the cryptocurrency validation service; and
a network communication interface coupled to a wide area network, wherein the application instructions include:
communicatively coupling, by the network communication interface, to a first device of the plurality of remote devices by way of the wide area network connection;
communicatively coupling, by the network communication interface, to a second device of the plurality of remote devices by way of a limited, single address interface of the second device utilizing the wide area network;
generating, by the processor and in conjunction with the first device and with the second device, a first key share of a N x M encryption key, where M is a number of key shares associated with the N x M encryption key and N is a number of key shares required to produce a valid digital signature with the N x M encryption key or to read the valid digital signature;
receiving, by the network communication interface, an encrypted first key share and associated decryption data, and saving the encrypted first key share and associated decryption data to the secure storage device; and
initiating, by the processor and the network communication interface, a recovery application facilitating conditional access to the encrypted first key share and the decryption data for an additional remote device excluded from the plurality of remote devices.

16. The server device of claim 15, wherein the application instructions further comprise:
communicatively coupling, by way of the network communication interface, to the additional remote device;
receiving a login to the recovery application from the additional remote device; and
in response to validating the login, providing access to the encrypted first key share and to the decryption data for the additional remote device.

17. The server device of claim 15, wherein the application instructions further comprise:
transferring, by the network communication interface, a copy of the encrypted first key share and associated decryption data to the second device for storage of the copy of the encrypted first key share and the associated decryption data at the second device.

18. The service device of claim 17, wherein the application instructions further comprise:
communicatively coupling, by way of the network communication interface, to the additional remote device;
communicatively coupling, by way of the network communication interface, to the second device;
receiving a login to the recovery application from the additional remote device;
in response to validating the login, retrieving, by the network communication interface, the copy of the encrypted first key share and associated decryption data from the second device; and
transferring the copy of the encrypted first key share and associated decryption data to the additional remote device.

19. The server device of claim 15, wherein the application instructions further comprise:
receiving, by the network communication interface, an encrypted second key share and associated second decryption data from the second device; and
saving the encrypted second key share and associated second decryption data to the secure storage device.

20. The server device of claim 19, wherein the application instructions further comprise:
communicatively coupling, by way of the network communication interface, to the additional remote device;
receiving a login to the recovery application from the additional remote device; and
in response to validating the login, providing access to the encrypted second key share and to the associated second decryption data for the additional remote device.
